# EUROPÄISCHE PATENTSCHRIFT

(11) **EP 1 314 048 B1**
(45) Veröffentlichungstag und Bekanntmachung des Hinweises auf die Patenterteilung: **12.05.2004**
(21) Anmeldenummer: 01993833.1
(22) Anmeldetag: 31.10.2001
(51) Int. Cl.: G01S 5/14

(54) **SYSTEM ZUR BESTIMMUNG DER POSITION EINES OBJEKTS**
SYSTEM FOR DETERMINING THE POSITION OF AN OBJECT
SYSTEME POUR DETERMINER LA POSITION D'UN OBJET

(30) Priorität: 08.11.2000 DE 10055289
(43) Veröffentlichungstag der Anmeldung: 28.05.2003
(73) Patentinhaber: Fraunhofer-Gesellschaft zur Förderung der angewandten Forschung e.V., 80686 München (DE)
(72) Erfinder: COURONNE , Sylvie, 91058 Erlangen (DE); KÖHLER, Stefan, 96472 Rödental (DE); ROHMER, Günter, 91058 Erlangen (DE); VON DER GRÜN, Thomas, 91077 Kleinsendelbach (DE); BRETZ, Ingmar, 93128 Regenstauf (DE); GERHÄUSER, Heinz, 91344 Waischenfeld (DE)
(74) Vertreter: Schoppe, Fritz, Dipl.-Ing.
(86) Internationale Anmeldenummer: PCT/EP2001/012646
(87) Internationale Veröffentlichungsnummer: WO 2002/039139

(56) Entgegenhaltungen:
- WO-A-99/48233
- US-A- 5 701 328
- US-A- 6 121 928

## Beschreibung

Die vorliegende Erfindung bezieht sich auf ein System zur Bestimmung der Position eines Objekts und insbesondere auf ein Navigationssystem für den Innen- und Außen-Bereich.

Auf dem Gebiet der Außenbereichs-Navigation hat in den letzten 25 Jahren die technische Entwicklung von Navigationssystemen anhand von Satellitensignalen rasante Fortschritte gemacht. Weltweit werden Empfänger bzw. Receiver, die das amerikanische GPS-Signal (GPS = Global Positioning System) oder das russische GLONASS-Signal auswerten, z. B. im Flugverkehr oder in der Automobilindustrie eingesetzt. In den letzten Jahren sind auf dem Markt auch Empfänger (GNSS = Global Navigation Satellite System) erhältlich, die beide Systeme kombinieren und dadurch höhere Ortsauflösungen erreichen. Die erreichbare Ortsauflösung kann zusätzlich durch Überlagerungssysteme bzw. Overlaysysteme, wie WAAS in Nordamerika oder EGNOS in Europa erhöht werden.

Das GPS-System als Beispiel eines Außenbereichs-Navigationssystems bzw. outdoor-Navigationssystems umfaßt eine Anzahl von sich teilweise bewegenden Satelliten, die Navigationssignale aussenden. Die Position eines Objekts wird im Empfänger des Objekts über die Laufzeiten der Navigationssignale zu dem Empfänger und aus den bekannten Positionen der Satelliten bestimmt. Dazu ist eine zeitliche Synchronisation der Satelliten notwendig, die durch Atomuhren in den einzelnen Satelliten erreicht wird. Die Navigationssignale sind Sichtlinien-Signale bzw. Line-Of-Sight-Signale, deren Kanalmodell lediglich durch die Ionosphäre der Erde bestimmt ist, so daß die Signalleistungen am Empfänger im wesentlichen immer gleich sind.

Ein Nachteil des GPS-Systems besteht darin, daß aufwendige Sender, hier Satelliten, notwendig sind, um das GPS-System als System zur Bestimmung der Position eines Objekts bzw. als Navigationssystem zu betreiben. Außerdem müssen die einzelnen Sender jeweils sehr genaue und aufwendige Uhren, hier Atomuhren, enthalten, um die notwendige zeitliche Synchronisation der Sender zu erreichen.

Ein weiterer Nachteil des GPS-Systems und allgemein von Satelliten-gestützten Systemen besteht darin, daß diese nicht für die hochgenaue Navigation im Innenbereich, wie z. B. Gebäuden, oder im Außenbereich in von den Satelliten abgeschatteten Bereichen, wie z. B. Gebäudeschluchten, verwendet werden können.

Auf dem Gebiet der innenbereichs-Navigation bzw. Indoor-Navigation werden derzeit Lösungen für die Ortung ausschließlich im Netz und nicht im Endgerät bzw. Empfänger vorgeschlagen, dabei wird die Position des Empfängers durch das Sendernetz des Systems ermittelt und - je nach Anwendung - dem Empfänger bzw. dem zu ortenden Modul drahtlos übermittelt. Als Beispiel dafür werden in mobilen Kommunikationsnetzen Navigationsdienste angeboten, die auch im Innenbereich verwendet werden können. Andere Systeme, die auf Transponder-Technologien basieren, werden für Logistikzwecke und die Nahbereichsidentifikation eingesetzt. Die Ortung durch Entfernungsmessungen ist das hier am meisten angewandte Verfahren. Dabei erfolgt die Ortung durch eine Laufzeitmessung von Funk-, Infrarot-, Ultraschall- oder Laser-Signalen. Genauere Systeme setzen auch modulierte Signale ein, um mittels einer geeigneten Signalverarbeitung eine höhere Auflösung zu erzielen. Andere Verfahren, wie Feldstärkemessungen oder die Auswertung des empfangenen Signalwinkels bei komplexeren Basisstationen, die mit phasengesteuerten Antennenanordnungen bzw. Phased-Array-Antennen ausgerüstet sind, werden meistens zusätzlich zur Entfernungsmessung eingesetzt.

Die aktuellen Systeme für die innenbereichs-Navigation bieten entweder Insel-Lösungen (Pico-Zellen) mit Tags, Lösungen, die auf der Entfernungsmessung basieren und die einen bidirektionalen Übertragungskanal verwenden und Lösungen mit kombinierten Systemen auf Basis mobiler Kommunikationsdienste.

Ein Nachteil der Insel-Lösungen besteht darin, daß die Netzstruktur sehr aufwendig ist. Ein Nachteil der Lösungen, die auf Entfernungsmessungen basieren, besteht darin, daß die Kanalkapäzität schnell erreicht wird, wenn zu viele Module bzw. Empfänger gleichzeitig im Netz bzw. System geortet werden müssen. Ein Nachteil der Lösungen mit kombinierten Systemen besteht darin, daß sowohl die Navigationssicherheit nicht immer gewährleistet ist, da der Empfänger mindestens zwei Basisstationen bzw. Sender im Gebäude empfangen muß, als auch die Ortungsgenauigkeit noch über 25 m im Außenbereich mit Satellitensystemen und über 100 m mit einer Kommunikationsinfrastruktur liegt und somit beispielsweise für Innenbereichsanwendungen nicht geeignet ist. Allgemein bieten die meisten Systeme für den Innenbereich lediglich eine 1D-Ortung bzw. eine Abstandsmessung oder eine 2D-Ortung, z. B. in x-y-Koordinaten.

Ein besonderes Problem der Innenbereichs-Navigationssysteme aber auch der Außenbereichs-Navigationssysteme, z. B. in abgeschatteten Gebäudebereichen, besteht darin, daß im Innenbereich, z. B. in Gebäuden, eine hohe Signaldynamik und Mehrwegsignale auftreten, die z. B. durch Reflexionen der Navigationssignale innerhalb der Gebäude entstehen. Diese Mehrwegsignale verzerren sehr stark den Übertragungskanal und gefährden eine zuverlässige Ortung bzw. Bestimmung der Position eines Objekts.

In KRAMAR, E., Funksysteme für Ortung und Navigation, Stuttgart, Berlin, Köln, Mainz 1973, S. 27, 92 bis 104 werden die Ortungssysteme Loran-A und Loran-C beschrieben. Die Ortung basiert bei dem Loran-A-System vornehmlich auf der Auswertung eines von einem ortsfesten Hauptsender ausgesendeten M-Impulses und eines von einem ortsfesten Nebensender ausgesendeten S-Impulses. Der Hauptsender sendet zunächst den M-Impuls aus. Der Nebensender sendet sein S-Impuls mit einem zeitlichen Versatz aus, der t_{b} + t_{c} beträgt, wobei t_{b} der Laufzeit entspricht, die der M-Impuls benötigt, um von dem Hauptsender zu dem Nebensender zu gelangen, um denselben zu aktivieren bzw. synchronisieren, und wobei t_{c} einer bekannten, fest eingestellten Verzögerung entspricht. An einem zu ortenden Empfänger wird der Laufzeitunterschied zwischen dem M- und dem S-Impuls gemessen. Unter Kenntnis des zeitlichen Versatzes zwischen den Sendezeiten und den festen Positionen des Haupt- und des Nebensenders einerseits und dem zeitlichen Versatz der Empfangszeiten des M- und S-Impulses andererseits kann eine Standlinie bestimmt werden, auf der sich der Empfänger befinden muß. Zur Unterscheidung verschiedener Haupt- und Nebensender-Paare werden die M-Impulse und S-Impulsen verschiedener Senderpaare mit unterschiedlichen Widerholfrequenzen ausgesendet. Das Loran-C-System unterscheidet sich von dem Loran-A-System durch die Anzahl der zur Ortung herangezogenen. S-Impulse. Jeder Nebensender sendet den S-Impuls mit einem unterschiedlichen zeitlichen Versatz zu dem M-Impuls aus. Zur Unterscheidbarkeit der Ortungssignale von Haupt- und Nebensendern werden bei Loran-C nicht einzelne Impulse sondern Pulsgruppen ausgesendet, die sich in Ihrer Anzahl unterscheiden. Zur Unterscheidbarkeit verschiedener Haupt- und Nebensender-Gruppen werden die Impulse der Pulsgruppen phasenkodiert. Ferner wird zusätzlich zu einer Grobortung, wie sie bei Loran-A durchgeführt wird, einer Phasendifferenzmessung zur Feinortung herangezogen. Für die Feinortung werden die ausgesandten Impulse mit einer definierten Hüllkurve versehen, die eine genau definierte Anstiegsflanke aufweist, an der ein bestimmter Meßpunkt bzw. Wendepunkt festgelegt ist, der beim zu ortenden Empfänger durch Differentiation der Anstiegsflanke genau ermittelt werden kann. Durch das Vorsehen mehrerer Nebensender kann die Position nicht nur wie bei dem Loran-A-System bis auf eine Hyperbelstandlinie genau sondern bis auf die Schnittlinie zweier bzw. mehrerer Hyperbelstandlinien genau bestimmt werden.

Die US 3,750,178 beschreibt ein Positionserfassungssystem zum Lokalisieren der geographischen Position einer Quelle von diskreten Hochfrequenzsignalen. Das System funktioniert im wesentlichen wie ein inverses Loran-System. Es weist eine Mehrzahl von beabstandeten Hochfrequenzempfangsstationen an bekannten geographischen Positionen auf, die die Hochfrequenzsignale der zu lokalisierenden Quelle empfangen, wobei die Laufzeitunterschiede des Hochfrequenzsignals von der Quelle zu den einzelnen Empfangsstationen bestimmt werden. Zur Synchronisation der Empfangsstationen ist ein Zeitgebungssender bzw. Loran-Sender vorgesehen, der Zeitgebungssignale aussendet, um digitale Stopuhren der Empfänger synchron zu starten. Die Stopuhren werden gestoppt, wenn das Hochfrequenzsignal von der Quelle empfangen wird. Die digitalen Stoppwerte werden von den Empfangsstationen über Sender zu einem Computer übermittelt, der die Positionsbestimmung vornimmt. Um den Zeitpunkt, zu dem die Stopuhren der einzelnen Empfangsstationen angehalten werden, genau zu bestimmen, werden die empfangenen Hochfrequenzsignale bestimmten Operationen unterzogen, um Markierungspulse zu erhalten, die eine genauere Bestimmung der Laufzeitunterschiede ermöglichen.

Die DE 21 37 846 B2 beschreibt ein Modulationsphasenvergleichs-Hyperbelverfahren und eine Einrichtung zur Ortung flächengebundener Fahrzeuge. Zur Standortbestimmung werden drei Empfangsstationen verwendet, die ein Meßsignal von einem Fahrzeug erfassen, dessen Standort bestimmt werden soll. Die Standortbestimmung wird von einer Zentrale vorgenommen, an die die Empfangsstationen das empfangene Meßsignal über feste Kabel weiterleiten. Unter Kenntnis der bekannten Laufzeiten, die die Meßsignale durch die Leitungen benötigen, kann die Zentrale aus den Unterschieden der Laufzeiten die Standortbestimmung vornehmen, wozu dieselbe Zähler und einen Zeittaktgeber aufweist, wobei die Zähler bei Eintreffen des frühest eintreffenden Meßsignals von einem der Sender gestoppt wird. Um Laufzeitschwankungen in den beteiligten Auswerte- und Übertragungseinrichtungen zu kompensieren, werden die in der Zentrale mittels eines Zeittaktgebers ermittelten Laufzeiten um einen Korrekturwert in einem Korrekturspeicher ergänzt. Der Korrekturwert wird intermittierend aus Vergleichsmessungen erhalten, bei der ein Vergleichssender mit bekanntem Standort anstatt eines Fahrzeuges das Meßsignal ausgibt. Für den Vergleichssender sind die Laufzeiten zu der Zentrale über die Empfangsstationen bekannt, so daß der Unterschied zwischen den durch die Zentrale ermittelten Laufzeit und den bekannten Laufzeiten für den Vergleichssender als Korrekturwerte in dem Korrekturspeicher abgelegt werden können. Um eine eindeutige Zuordnung 'eines empfangenen Meßsignals zu einem bestimmten Fahrzeug oder dem Vergleichssender 'zu ermöglichen, umfaßt die Zentrale einen Codierer und einen Hochfrequenzsender, um im Rahmen einer Aufforderung vor der eigentlichen Standortbestimmung mittels eines Befehlssignals entweder ein zu ortendes Fahrzeug oder den vergleichssender zur Abgabe eines Meßsignals aufzufordern. Jedes zu ortende Fahrzeug und der Vergleichssender weisen einen Fahrzeugempfänger mit einem Selektivrufempfänger auf, der auf ein unterschiedliches Befehlssignal anspricht.

Die US 4,494,119 beschreibt ein Notrufhochfrequenzlokalisierungsverfahren und -System, das Richtungserfassungstechniken mit Berechnungen kombiniert, die auf der Signalstärke basieren, um einen Notrufsender zu lokalisieren. Das System umfaßt einen zu ortenden Notrufsender, eine Mehrzahl von an bekannten Positionen angeordneten Slave-Wiederholeinheiten, um das Notrufsignal zu empfangen und ihre Signalstärke an eine Zentralstation zu berichten, eine Zentralstation, um die Position des Notrufsenders basierend auf den gemessenen Signalstärken und den bekannten Positionen der Slave-Wiederholeinheiten zu berechnen, und um eine Rettungseinheit loszuschicken, und Rettungseinheiten, die mit Richtungserfassungsgeräten ausgestattet sind, um den Notrufsender zu erreichen. Dem Notrufsender ist eine Ziel-ID und den Slave-Widerholeinheiten ist jeweils eine Einheit-ID zugeordnet, wobei alle entsprechende Codierer aufweisen. der Notrufsender überträgt mit seinem Notrufsignal die Ziel-ID. Die Slave-Einheiten berichten die Empfangssignalstärke zusammen mit der Ziel-ID und der Einheit-ID an die Zentralstation, die wiederum einen entsprechenden Dekodierer aufweist.

Die US 5,208,756 bezieht sich auf ein Fahrzeuglokalisierungs- und Navigationssystem, das in Verbindung mit einem Mobiltelephonnetz arbeitet. Zur Navigation eines Fahrzeuges ist ein Fahrzeuglokalisierungssende/Empfänger, ein Standortmobiltelephon und eine Antenne vorgesehen. Über die Antenne empfängt der Fahrzeuglokalisierungssende/Empfänger in Dualtonmehrfrequenz- bzw. DTMF-Signal, das von Telephonstationen ausgestrahlt wird. Aus den bekannten Positionen der Telephonstationen und der empfangenen Signalstärke bestimmt der Fahrzeuglokalisierungssende/Empfänger die Position des Fahrzeuges. Die bestimmte Position wird über die Basisstationen extern an eine Zentralstation übersandt, wo beispielsweise mehrere Fahrzeuge überwacht und navigiert werden.

Die DE 25 25 446 C2 bezieht sich auf eine Ortungseinrichtung mit hochkonstantem Zeitnormal. Die Ortungseinrichtung besteht aus mehreren Empfangsstationen mit frequenzgleich abstimmbaren Empfängern und hochkonstanten Zeitnormalen, wie z.B. einer Atomuhr, die untereinander synchronisierbar sind. Eine Zentralstation ermittelt die Laufzeitdifferenzen zwischen je zwei Empfangsstationen sowie den Standort eines zu ortenden Senders jeweils anhand des Schnittpunktes der den ermittelten Laufzeitdifferenzen entsprechenden Hyperbelstandlinien. Um einerseits die Auswertung von Empfangssignalen eines zu ortenden Senders an einer Zentrale per Kreuzkorrelation zwischen zwei an verschiedenen Empfangsstationen empfangenen Signalen vorzunehmen, aber andererseits gegen Fehler bei der Übertragung von den Empfangsstationen bis zum Eintreffen an der Zentralstation unempfindlich zu sein, werden die empfangenen Signale mit einem aus einem Zeitnormal der Empfangsstationen abgeleiteten zeitbezugszeichen versehen und an eine zentralstation gesendet, die die Kreuzkorrelation durchführt.

Die DE 2829558 A1 bezieht sich auf ein Phasenvergleichs-Hyperbelverfahren zur Ortung flächengebundener Fahrzeuge und einer Einrichtung zur Durchführung des Verfahrens und stellt im wesentlichen eine Weiterentwicklung des Systems gemäß im vorhergehenden erwähnten DE 21 37 846 B2 dar. Um gegen Störungen der Übertragung der Empfangssignale von den Empfangsstationen zur Zentrale unanfällig zu sein, wird jedes empfangene Meßsignal an den Empfangsstationen mit einem lokal erzeugten Bezugssignal von einem stationären Quarzoszillator verglichen und der Phasenunterschied gegenüber dem Bezugssignal digital über einen Funkkanal zur Zentrale übertragen und dort zur Bildung der Laufzeitdifferenzen ausgewertet. In bestimmten Abständen wird ein Eichsender geortet, dessen Phasenunterschied an den Empfangsstationen zu den lokal erzeugten Bezugssignalen bekannt ist. Hieraus werden die Korrekturwerte angezeigt.

Die DE-OS-1813128 bezieht sich auf ein System zur Ermittlung und Anzeige des jeweiligen Standorts von Fahrzeugen. Das System besteht aus Empfängern, einem zentralen Rechner und Speicher und einer Hauptuhr. Jeder Empfänger umfaßt eine Uhr, die mit der Hauptuhr synchronisiert sind. Die Synchronisation wird über Verzögerungskreise durchgeführt, die Verzögerungen bewirken, die die Laufzeitunterschiede der synchronisierenden Signale von der zentralen Hauptuhr zu den verschiedenen örtlichen Empfängeruhren ausgleichen. Bei Empfang eines Signals von dem Fahrzeug senden die Empfänger die Uhrzeiten von dem Quarzuhren zu dem zentralen Rechner, der die Auswertung unter Verwendung der Hyperboloidschnittpunkte durchführt.

Die DE-PS 1240146 betrifft ebenfalls ein Verfahren zur Bestimmung des Standorts von Fahrzeugen, wobei zur Standortbestimmung nicht nur Laufzeiten herangezogen werden, sondern ferner der Abstand des jeweiligen Fahrzeugs von einer Ebene, in der sich die ortsfesten Stationen befinden, ermittelt und als Korrektur verwendet wird. Als ortsfeste Stationen können sowohl Empfänger als auch Sender verwendet werden. Die Verwendung genauer Zeitnormale sowohl Sender- als auch empfangsseitig ist notwendig.

Die DE 19647098 A1 betrifft allgemein ein Ortungssystem zum mehrdimensionalen Orten eines Objektes auf der Grundlage von gemessenen Laufzeitdifferenzen von elektromagnetisch übertragenen Signalen. Gemäß einem ersten Aspekt wird ein Ortungssystem beschrienben, bei dem das zu ortende Objekt eine Empfangs- oder Sendeeinheit aufweisen kann, während die ortsfesten Einheiten Sende- oder Empfangseinheiten sein können, und bei dem die ortsfesten Einheiten ungenaue Quarzuhren aufweisen können, die zur Synchronisation auf eine Systemzeit mit einem allen ortsfesten Einheiten gemeinsamen zentralen Taktgeber verbunden sind. Um eine Verfälschung der Zeitsynchronisation durch Signallaufzeiten zu vermeiden, wird die Verwendung von Signalleitungen bzw. Kabeln definierter Länge vorgeschlagen, so daß der entstehende Übertragungsfehler bekannt und damit kompensierbar ist. Insbesondere wird ein Ortungssystem bestehend aus Sendern zur Ortung eines Empfängers beschrieben. Jeder Sender ist über Signalleitungen bekannter Länge mit einem zentralen Taktgeber verbunden, wodurch die Sender durch den einen Taktgeber synchronisiert sind. Die Sender senden eine elektromagnetische Welle aus, auf deren Trägerwelle ein Datenstrom aufmoduliert wird, der ein Zeitsignal sowie einen den Sender kennzeichnenden, korrelierbaren Code enthält. Der Empfänger umfaßt einen eigenen Taktgeber, um einen lokalen Zeitstandard zu erhalten. Der Empfänger nutzt die von den Sendern übertragenden codierten elektromagnetischen Signale, um mittels einer Recheneinheit daraus die Positions-Geschwindigkeitsund Zeitinformationen relativ zum eigenen Zeitstandard zu gewinnen.

Die US 6,121,928 bezieht sich auf ein objektgebundenes Positionsbestimmungsgerät. Das Objekt bestimmt seine Position mittels einem Netz von Transceiver die GPS Signale empfangen, pseudo GPS Signale und ihre eigene Positionsdaten aussenden. An Hand der Positionssignale und der Positionsdaten wird die Objektposition am Objekt errechnet.

Die Aufgabe der vorliegenden Erfindung besteht darin, ein System zur Bestimmung der Position eines Objekts zu schaffen, das eine einfache, zuverlässige und genaue Bestimmung der Position eines Objekts ermöglichen.

Diese Aufgabe wird durch ein System zur Bestimmung der Position eines Objekts gemäß Anspruch 1 gelöst.

Ein Vorteil der vorliegenden Erfindung besteht darin, daß die Erfindung bei Navigationsanwendungen, die keine oder eine eingeschränkte Sichtverbindung zu den Sendern des Systems zur Bestimmung der Position eines Objekts besitzen, also bei Anwendungen im Innenbereich, wie z. B. Gebäuden, oder im Außenbereich in abgeschatteten Außenbereichen, wie z. B. Gebäudeschluchten, bei denen zwangsläufig eine hohe Signaldynamik und Mehrwegsignale, die den Übertragungssignal stark verzerren, auftreten, eine hohe Ortungszuverlässigkeit eines Objekts, eine dreidimensionale Ortung (x,y,z-Koordinaten) und eine Ortung mit einem System ermöglicht, das unempfindlich gegenüber Störsignalen ist. Dies liegt daran, daß die vorliegende Erfindung ein CDMA-basiertes (CDMA = Code Division Multiple Access) System verwendet, wobei das CDMA-Verfahren unempfindlicher als bekannte Innenbereichs-Navigationsverfahren auf Störungen durch andere Funkdienste, wie beispielsweise mobile Kommunikationsdienste, z. B. TDMAoder CDMA-basierte Systeme, digitalen Rundfunk als auch Satelliten-Dienste, z. B. bei Anwendungen im Außenbereich, reagiert.

Das System der vorliegenden Erfindung ermöglicht eine höhere Ortsauflösung als bei vorhandenen CDMA-Systemen. Bei der Implementierung mit aktuell verfügbaren Technologien kann eine Ortungsgenauigkeit von weniger als 1 m erreicht werden. Bei kommerziellen Anwendungen wird zunächst eine mögliche Auflösung von ca. 1 - 5 m erwartet, ist aber theoretisch nur durch die Wellenlänge der verwendeten Trägerfrequenz begrenzt. Bei einer HF-Trägerfrequenz von 2,4 GHz im ISM-Band kann die maximale Positionsauflösung 6,2 cm (eine halbe Wellenlänge) betragen.

Ein weiterer Vorteil der vorliegenden Erfindung, der durch die Anwendung des CDMA-Verfahrens begründet ist, ist die geringere elektromagnetische Belastung durch das Sendernetz im Vergleich zu Verfahren, die Signallaufzeiten direkt oder indirekt (durch einen Frequenzsweep des Senders) messen, da durch die bei CDMA-Systemen typischen Verstärkungsgewinne durch die Entspreizung des Signals Sender mit sehr niedriger Sendeleistung die Innenbereiche bzw. Außenbereiche versorgen. Da CDMA-Signale unter dem Rauschpegel liegen, ist keine hohe Sendeleistung für die Ortung notwendig.

Ein weiterer Vorteil der vorliegenden Erfindung besteht darin, daß das System zur Bestimmung der Position eines Objekts gemäß der Erfindung keinen Rückkanal für die Ortung und die Navigation benötigt, da die Ortung bzw. Bestimmung der Position im Empfänger bzw. Empfängermodul und nicht im Sendernetz erfolgt, wodurch die Zahl der Benutzer, Anwender bzw. Empfängermodule nicht begrenzt ist, keine Gefahr einer Netzüberlastung besteht und der Funkkanal nur mit vom Sendernetz erzeugten Signalen belastet ist. Dadurch wird ferner eine reduzierte Komplexität der Basisstationen bzw. Sender und der Endgeräte bzw. Empfänger ermöglicht, da die Basisstationen lediglich eine Sendestufe und die Endgeräte lediglich eine Empfangsstufe benötigen. Daher lassen sich die Empfänger einfach in existierenden Systemen, wie PDAs oder Handtelephonen bzw. Handys, integrieren.

Ein weiterer wichtiger Vorteil dieser Erfindung ist daher auch die Rückwärts-Kompatibilität mit Satelliten-Navigations-Systemen, so daß in Endgeräten, die dieses Navigationsverfahren verwenden, wesentliche Teile der Hardware für den Empfang von CDMA-basierten, Satelliten-gestützten Außenbereichs-Navigationssystemen, wie GPS, GLONASS, WASS, EGNOS und das zukünftige europäische System GALILEO, wiederverwendet werden können.

Ein weiterer Vorteil der vorliegenden Erfindung besteht darin, daß es möglich ist, die Positionsbestimmungsgenauigkeit anwendungsspezifisch einzustellen, und damit auch die Leistungsaufnahme des Systems zu variieren, da die Position im Modul bestimmt wird.

Ein weiterer Vorteil der vorliegenden Erfindung besteht darin, daß die Reichweite eines Senders oder einer Basisstation in vertretbaren Abständen (bis 100 m) liegt.

Ein weiterer Vorteil der Erfindung besteht darin, daß zu dem Empfänger zusätzlich lokale Informationen mitübertragen werden können oder an Referenzstationen geladen werden können, wie z. B. aktuelle Meldungen oder ein Gebäudeplan. Mit einem integrierten Sprachcodierer kann dieses System als Orientierungshilfe für Sehbehinderte verwendet werden.

Bevorzugte Ausführungsbeispiele der vorliegenden Erfindung werden nachfolgend unter Bezugnahme auf die beigefügten Zeichnungen näher erläutert. Es zeigen:
- Fig. 1: ein Ausführungsbeispiel eines Systems zur Bestimmung der Position eines Objekts gemäß der vorliegenden Erfindung;
- Fig. 2: ein Ausführungsbeispiel einer Referenz-Sende-Vorrichtung des Systems der vorliegenden Erfindung von Fig. 1;
- Fig. 3: ein Ausführungsbeispiel einer Sende-Empfangs-Vorrichtung des Systems der vorliegenden Erfindung von Fig. 1;
- Fig. 4: eine allgemeine Darstellung einer Positionsbestimmungsvorrichtung des Systems der vorliegenden Erfindung von Fig. 1;
- Fig. 5: ein Ausführungsbeispiel einer Positionsbestimmungsvorrichtung des Systems der vorliegenden Erfindung von Fig. 1;
- Fig. 6: ein Ausführungsbeispiel einer Korrelationseinrichtung und einer Integrationseinrichtung der Positionsbestimmungsvorrichtung von Fig. 5; und
- Fig. 7: ein Ausgangssignal der Integrationseinrichtung von Fig. 6.

Diese Erfindung beschreibt ein drahtloses, hochauflösendes, funkbasiertes und zellulares Navigationssystem bzw. ein System zur Bestimmung der Position eines Objekts, das zu Ortung von beweglichen oder bewegbaren Objekten, wie z. B. Personen, im Außen- und/oder im Innen-Bereich dient. Bei einem Einsatz im Innenbereich können in diesem System zusätzliche Informationen, wie z. B. ein Gebäudeplan, als Orientierungshilfe angeboten werden. Durch die zellulare Struktur kann das beschriebene System auch zur Bestimmung der Position eines Objekts im Außenbereich oder in Gebäudekomplexen, wie Messegeländen, die aus mehreren Gebäuden bestehen, eingesetzt werden.

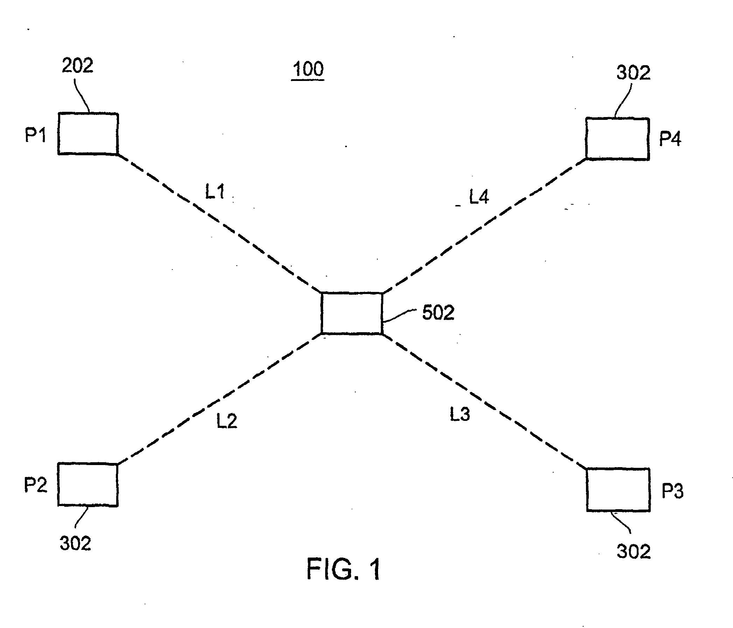

Fig. 1 zeigt ein Ausführungsbeispiel eines Systems zur Bestimmung der Position eines Objekts. Das System 100 umfaßt eine Referenz-Sende-Vorrichtung 202, die in einer festen Position angeordnet ist, drei Sende-Empfangs-vorrichtung 302, die in festen Positionen zueinander und zu der Referenz-Sende-Vorrichtung 202 angeordnet sind, und eine Positionsbestimmungsvorrichtung 502 zum Bestimmen der Position des Objekts, wobei das Objekt die Positionsbestimmungsvorrichtung 502 aufweist. Um die Position des Objekts mit der Positionsbestimmungsvorrichtung 502 im Zweidimensionalen zu bestimmen, muß das System 100 mindestens drei Sende-Vorrichtungen, beispielweise eine Referenz-Sende-Vorrichtung 202 und zwei Sende-Empfangs-Vorrichtung 302, umfassen. Um eine Position des Objekts mit der Positionsbestimmungsvorrichtung 502 im Dreidimensionalen bzw. im Raum zu bestimmen, muß das System 100 mindestens vier Sende-Vorrichtungen, beispielsweise eine Referenz-Sende-Vorrichtung 202 und drei Sende-Empfangs-Vorrichtung 302 umfassen, wie es in Fig. 1 gezeigt ist.

Zur dreidimensionalen Bestimmung der Position des Objekt mit der Positionsbestimmungsvorrichtung 502 werden die Positionen P1, P2, P3 und P4 der Sende-Vorrichtungen 202, 302 und die Laufzeiten L1, L2, L3 und L4 von Navigationssignalen bzw. Informationssignalen von den Sende-Vorrichtungen 202, 302 zu der Positionsbestimmungsvorrichtung 502 benötigt. Dazu müssen die Sende-Vorrichtungen 202, 302 zeitlich synchron zueinander arbeiten, d. h. ihre Uhren müssen synchron arbeiten. Die Laufzeiten L1, L2, L3 und L4 der Informationssignale werden aus der Differenz der Empfangszeiten der Informationssignale bei der Positionsbestimmungsvorrichtung 502 und der Sendezeiten der Informationssignale von den Sende-Vorrichtungen '202, '302 bestimmt. Da die Sende-Vorrichtungen 202, 302 zeitlich synchron arbeiten, benötigt die Positionsbestimmungsvorrichtung 502 selbst keine eigene exakte Zeitbasis bzw. keine exakt laufende Uhr. Die Positionsbestimmungsvorrichtung 502 benötigt lediglich einen Taktgeber oder eine Zeit-Lieferungseinrichtung, die in bestimmten Zeitbereichen Zeitabstände relativ messen kann.

Zur zweidimensionalen (bzw. zur dreidimensionalen) Positionsbestimmung, d. h. zur Bestimmung der Position eines Objekts in der Ebene (bzw. im Raum), sind drei (bzw. vier) Sender bzw. Sende-Vorrichtungen 202, 302 notwendig. Bei der zweidimensionalen Bestimmung der Position könnte jedoch beispielsweise auf den dritten Sender bzw. hier auf eine zweite Sende-Empfangs-Vorrichtung 302 verzichtet werden, obwohl die um die zwei verbleibenden Sender, d. h. die Referenz-Sendevorrichtung 202 und die verbleibende Sende-Empfangs-Vorrichtung 302, gezogenen Kreise mit dem Radius der Laufzeit der Navigationssignale zwei Schnittpunkte aufweisen und dadurch die Positionsbestimmung des Objekts nicht eindeutig ist. Dies liegt daran, daß der richtige Schnittpunkt bzw. die richtige Position des Objekts auch über die Phase ohne eine dritte Sende-Vorrichtung 202, 302 bestimmt werden kann. Die dritte Sende-Vorrichtung ist jedoch bei der zweidimensionalen Bestimmung der Position notwendig, um die tatsächliche Empfangszeit der Informationssignale im Empfänger bzw. der Positionsbestimmungsvorrichtung 502 zu bestimmen, um die Laufzeiten der Informationssignale zu der Positionsbestimmungsvorrichtung 502 exakt berechnen zu können. Daher ist in der Positionsbestimmungsvorrichtung 502 lediglich eine Zeit-Lieferungseinrichtung, z. B. eine Uhr, notwendig, die nicht exakt zeitlich mit den Sende-Vorrichtungen 202, 302 synchronisiert ist, und die über die Informationen der zusätzlichen Sende-Vorrichtung mit den Sende-Vorrichtungen 202, 302 synchronisiert werden kann. Ähnliches gilt für den dreidimensionalen Fall. Hier ist ebenfalls, da eine Bestimmung der Position abhängig von der Phase möglich ist, eigentlich keine vierte Sende-Vorrichtung notwendig. Die vierte Sende-Vorrichtung 202, 302 bzw. die dritte Sende-Empfangs-Vorrichtung 302 in Fig. 1 dient jedoch zur exakten Empfangszeitbestimmung der Informationsignale innerhalb der Positionsbestimmungsvorrichtung 502.

Die Zeitsynchronisation im Netz der Sende-Vorrichtungen 202, 302 von Fig. 1 erfolgt in zwei Schritten. Beim Einschalten der Infrastruktur wird die Synchronisation im Netz durch programmierbare Delays bzw. Zeitkorrekturwerte eingerichtet, und beim Betrieb wird in regelmäßigen Abständen diese zeitliche Synchronisation überprüft bzw. korrigiert. Die Synchronisation der Sende-Vorrichtung 202, 302 wird über eine Verbindung zwischen denselben, über die die Vorrichtungen miteinander kommunizieren, erreicht. Dabei liefert z. B. die Referenz-Sende-Vorrichtung 202 eine Referenzzeit in Form eines Referenzzeit-Signals, mit der sich die Sende-Empfangs-Vorrichtungen 302 über die Verbindung zeitlich synchronisieren. Diese Verbindung kann drahtgebunden bzw. kabelgebunden, wie z. B. über elektrische oder optische Kabel, oder drahtlos ausgeführt sein. Die drahtgebundene Verbindung wird dabei bevorzugt, da die Übertragungen von Referenzzeit-Signalen von der fest positionierten Referenz-Sende-Vorrichtung 202 zu den fest positionierten Sende-Empfangs-Vorrichtungen 302 direkt sind und bekannte Laufzeiten über die Verbindung besitzen, die bei der Synchronisation der Uhren berücksichtigt werden müssen. Bei der drahtlosen Verbindung sind hingegen Sichtlinien bzw. Line-of-Sight-Signale notwendig, um die Uhren synchronisieren zu können, dabei können Mehrwegsignale neben den Sichtliniensignalen, d. h. beispielsweise Reflexionen des Referenzeit-Signals der Referenz-Sende-Vorrichtung 202 an Wänden auf dem Weg zu der jeweiligen Sende-Empfangs-Vorrichtung 302, auftreten, die die Bestimmung der Laufzeiten des Referenzeit-Signals zu den Sende-Empfangs-Vorrichtungen 302 erschweren. Bei sowohl der drahtgebundenen als auch der drahtlosen Übertragung von Referenzzeit-Signalen werden die Uhren bzw. Zeit-Lieferungseinrichtungen der Sende-Empfangs-Vorrichtungen 302 mit der Uhr bzw. einer Referenzzeit-Lieferungseinrichtung der Referenz-Sende-Vorrichtung 202, die das Referenzzeit-Signal liefert, synchronisiert.

Das System 100 von Fig. 1 kann als Sende-Vorrichtungen 202, 302 auch nur Sende-Empfangs-Vorrichtungen 302 aufweisen, wobei abhängig von der Struktur und der Umgebung des Systems eine der Sende-Empfangs-Vorrichtungen 302 zu einer Referenz-Sende-Empfangs-Vorrichtung bzw. Referenz-Sende-Vorrichtung bestimmt wird. Eine solche Bestimmung kann beispielsweise davon abhängen, daß eine Sende-Empfangs-Vorrichtung 302 der mehreren Sende-Empfangs-Vorrichtungen 302 die genaueste Uhr besitzt und damit der Lieferant einer Referenz-Uhrzeit sein kann, auf die sich alle anderen Sende-Empfangs-Vorrichtungen 302 synchronisieren können.

Weiterhin kann jedes System 100 eine sehr große Anzahl von Sende-Vorrichtungen 202, 302 aufweisen, die z. B. nur Sende-Empfangs-Vorrichtungen 302 sind. Diese große Anzahl von Sende-Vorrichtungen kann auf sehr viele Untergruppen, wie z. B. Gebäude in einem Gebäudekomplex, Räume in einem Gebäude etc., verteilt sein, da z. B. die Reichweite der Sende-Vorrichtungen begrenzt ist, wobei hierarchische Strukturen in dem System gebildet werden können. Jede Untergruppe, wie z. B. ein Raum, kann darin wiederum eine eigene hierarchische Struktur von Sende-Vorrichtungen besitzen, in der eine Sende-Vorrichtung zu einer Referenz-Sende-Vorrichtung bzw. Referenz-Sende-Empfangs-Vorrichtung bestimmt werden kann, auf die sich alle anderen Sende-Vorrichtungen der Untergruppe synchronisieren, weil diese Referenz-Sende-Vorrichtung beispielsweise die genaueste Uhr besitzt oder selbst mit einer Sende-Vorrichtung einer übergeordneten Gruppe synchronisiert ist. Eine übergeordnete Gruppe, wie z. B. ein Stockwerk oder ein Gebäude, kann für sich Untergruppen, wie z. B. Räume, aufweiseh, die sich mit einer ausgewählten Referenz-Sende-Vorrichtung, wie z. B. des Stockwerks oder des Gebäudes, synchronisieren usw.

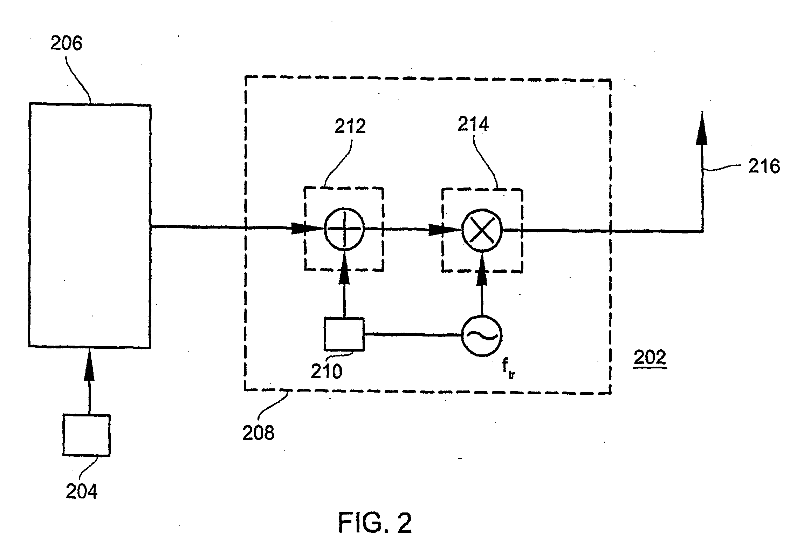

Fig. 2 zeigt ein Ausführungsbeispiel einer Referenz-Sende-Vorrichtung des Systems der vorliegenden Erfindung von Fig. 1. Die Referenz-Sende-Vorrichtung 202 umfaßt eine Referenzzeit-Lieferungseinrichtung 204 zum Liefern 'eines Referenzzeit-Signals, das eine Referenz-Uhrzeit angibt, eine Signalerzeugungseinrichtung 206 zum Erzeugen eines Informationssignals bzw. Navigationssignals, das die Sendezeit des Informationssignals, die aus dem Referenz-Zeitsignal bestimmt. wird, aufweist, und eine Sendeeinrichtung 208 zum Senden des Informationssignals und/oder des Referenzzeit-Signals.

Die Referenzzeit-Lieferungseinrichtung 204 ist vorzugsweise ein Taktgeber oder eine Uhr etc., die eine Zeitbasis zum Bestimmen einer Uhrzeit bzw. eines Zeitpunktes, in diesem Fall der Referenz-Uhrzeit, liefert. Die Signalerzeugungseinrichtung 206 ist vorzugsweise eine analoge oder digitale Signalerzeugungseinrichtung, wie z. B. eine verarbeitungseinrichtung, die ein Informationssignal erzeugt, in dem unter anderem die Sendezeit des Informationssignals selbst enthalten ist. Die Signalerzeugungseinrichtung 206 kann ferner angeordnet sein, um ein Informationssignal zu erzeugen, das ferner die Position der Referenz-Sende-Vorrichtung 202, lokale Informationen für den Bereich des Netzes der Sende-Referenz-Vorrichtung 202 und der Sende-Empfangs-Vorrichtungen 302 bzw. für den Bereich, in dem sich das Objekt der Positionsbestimmungsvorrichtung 502 befindet, lokale Meldungen, spezifische Systemparameter, Synchronisierungsdaten, einen Umgebungs- oder Gebäudeplan und/oder Verzeichnisse von Referenz-Sende-Vorrichtungen 202 und/oder Funkbalken aufweist.

Die Sendeeinrichtung 208 der Referenz-Sende-Vorrichtung 202 weist vorzugsweise eine Codelieferungseinrichtung 210 zum Liefern eines Codes, der der Referenz-Sende-Vorrichtung 202 zugeordnet ist, und eine Codierungseinrichtung 212 zum Codieren des Informationssignals mit dem Code der Codelieferungseinrichtung 210 auf. Die Codelieferungseinrichtung 210 ist vorzugsweise ein Speicher, der ein kontinuierliches (analoges) oder wertdiskretes (digitales) Signal enthält, das den Code darstellt. Bevorzugt wird dabei ein rauschähnliches Signal bzw. ein rauschähnlicher Code (PN-Codes; PN = Pseudo Noise), der sowohl in den Sende-Vorrichtungen 202, 302 als auch der Positionsbestimmungsvorrichtung 502 unabhängig voneinander wiedererzeugt werden kann. Zu diesen Codes gehören unter anderem die Codes maximaler Länge (m-Sequenzen). Andere mögliche Codes sind beispielsweise die Gold-Sequenzen.

Die Codierungseinrichtung 212 der Sendeeinrichtung 208 ist vorzugsweise eine synchrone Operation oder eine Exklusiv-Oder-Einrichtung (EXLUSIVE-OR), die den Code mit dem Informationssignal zusammenaddiert, wodurch eine Bandspreizung des Informationssignals erfolgt. Durch die Verwendung von rauschähnlichen Signalen bzw. Codes wird eine gleichmäßige Verteilung der Signalleistung des Informationssignals über das gespreizte Frequenzband erreicht. zur Rückgewinnung des Informationssignals in beispielsweise der Positionsbestimmungsvorrichtung 502 wird dieses Informationssignal mit dem zur Spreizung benutzten Code korreliert. Hierzu wird der in der Referenz-Sende-Vorrichtung 202 erzeugte Code phasenrichtig auf den Empfangscode synchronisiert und mit dem Empfangssignal multipliziert. Das Informationssignal wird dann wieder auf die ursprüngliche Bandbreite dekorreliert. Dem Signal überlagerte Störungen werden dabei spektral gespreizt und z. B. durch eine nachfolgende Signalintegration oder eine Tiefpaßfilterung in ihrer Amplitude entsprechend dem Bandbreitenverhältnis reduziert.

Die Sendeeinrichtung 208 der Referenz-Sende-Vorrichtung 202 kann ferner eine Modulationseinrichtung 214 zum Modulieren des Informationssignals und/oder des Referenzzeit-Signals auf ein Trägersignal, das eine Trägerfrequenz f_{TR} aufweist, umfassen. Die Modulationseinrichtung 214 ist vorzugsweise eine Mischeinrichtung bzw. eine Multiplikationseinrichtung, die das informationssignal auf das Trägersignal moduliert, wobei das Trägersignal vorzugsweise ein Hochfrequenz-Trägersignal ist. Die Modulationseinrichtung 214 führt vorzugsweise eine Phasenumtastungs-Modulation (PSK-Modulation oder BPSK-Modulation) zum Modulieren des Informationssignals auf das Trägersignal durch. Es können jedoch auch andere bekannte Modulationsverfahren verwendet werden.

Die Referenz-Sende-Vorrichtung 202 kann beispielsweise bei der Verwendung eines HF-Trägersignals eine Antenne 216 aufweisen, die unter anderem zum Senden des HF-Signals verwendet werden kann.

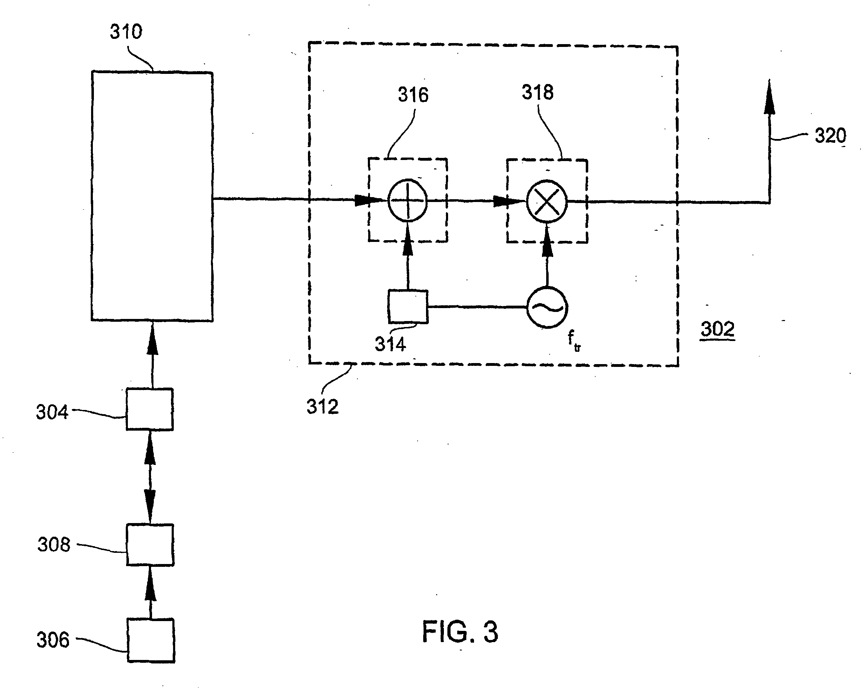

Fig. 3 zeigt ein Ausführungsbeispiel einer Sende-Empfangs-Vorrichtung des Systems der vorliegenden Erfindung von Fig. 1. Die Sende-Empfangs-Vorrichtung 302 umfaßt vorzugsweise eine Zeit-Lieferungseinrichtung 304 zum Liefern eines Zeitsignals, das eine Uhrzeit angibt, eine Empfangseinrichtung 306 zum Empfangen des Referenzzeit-Signals von der Referenz-Sende-Vorrichtung 202 oder zum Empfangen eines Zeitsignals von einer anderen Sende-Empfangs-Vorrichtung 302 als Referenzzeit-Signal, eine Synchronisierungseinrichtung 308 zum Verarbeiten des Zeitsignals und des Referenzzeit-Signals und zum Synchronisieren der Uhrzeit der Sende-Empfangs-Vorrichtung 302 mit der Referenz-Uhrzeit, eine Signalerzeugungseinrichtung 310 zum Erzeugen eines Informationssignals, das die Sendezeit des Informationssignals, die aus dem Zeitsignal bestimmt wird, aufweist, und eine Sendeeinrichtung 312 zum Senden des Informationssignals.

Wie im vorhergehenden erwähnt, kann das System der Sende-Vorrichtungen 202, 302 nach Fig. 1 auch nur aus Sende-Empfangs-Vorrichtungen 302 bestehen, wobei abhängig von der Struktur des Systems eine oder mehrere Sende-Empfangs-Vorrichtungen 302 zu Referenz-Sende-Vorrichtungen bzw. Referenz-Sende-Empfangs-Vorrichtungen bestimmt werden. Das Zeitsignal, das von der Zeit-Lieferungseinrichtung 304 geliefert wird, ist dann das Referenzzeit-Signal, auf das sich die anderen Sende-Empfangs-Vorrichtungen 302 synchronisieren. Durch eine solche Struktur wird eine stärkere Flexibilität des Systems abhängig von den äußeren Umständen des Systems und eine höhere Zuverlässigkeit, z. B. wenn eine Sende-Empfangs-Vorrichtung als Referenz-Sende-Empfangs-Vorrichtung ausfällt, erreicht. Die Empfangseinrichtung 306 und die Synchronisierungseinrichtung 308 sind bei einer zur Referenz-Sende-Vorrichtung bestimmten Sende-Empfangs-Vorrichtung 302 auch nicht überflüssig, da sich diese selber auch wieder mit einer übergeordneten Sende-Empfangs-Vorrichtung 302, die ebenfalls eine Referenz-Sende-Vorrichtung beispielsweise einer übergeordneten Gruppe ist, synchronisieren kann. Dadurch wird eine hierarchische Struktur ermöglicht.

Zurückkehrend zu Fig. 3, ist die Zeit-Lieferungseinrichtung 304 vorzugsweise ein Taktgeber oder eine Uhr etc. die eine Zeitbasis zum Bestimmen einer Uhrzeit bzw. eines Zeitpunktes, in diesem Fall der Uhrzeit, liefert.

Die Empfangseinrichtung 306 ist vorzugsweise eine Einrichtung zum Verarbeiten des Referenzzeit-Signals von der Referenz-Sende-Vorrichtung 202, die das über eine Verbindung eintreffende Referenzzeit-Signal verarbeitet. Die Empfangseinrichtung 306 kann angepaßt sein, um ein über die drahtgebundene oder drahtlose Verbindung übermitteltes Referenzzeit-Signal zu verarbeiten.
Die Synchronisierungseinrichtung 308 der Sende-Empfangs-Vorrichtung 302 weist vorzugsweise eine Uhrzeit-Korrektureinrichtung zum Korrigieren des Zeitsignals bzw. der Uhrzeit der Zeit-Lieferungseinrichtung 304 mit einer Delay oder mit einem Zeitkorrekturwert auf, der den zeitlichen Unterschied der Referenz-Uhrzeit der Referenzzeit-Lieferungseinrichtung 204 der Referenz-Sende-Vorrichtung 202 und der Uhrzeit der Zeit-Lieferungseinrichtung 304 der Sende-Empfangs-Vorrichtung 302 darstellt. Dieser Zeitkorrekturwert kann beispielsweise ein Korrekturfeld sein, das bei der Einrichtung des Systems gemessen wird und in Zeitabständen neu bestimmt wird. Die Referenz-Sende-Vorrichtung 202 muß daher für den Fall eines einfachen Sendernetzwerkes nicht unbedingt ständig mit den Sende-Empfangs-Vorrichtungen 302 kommunizieren. Bei einem komplexeren System, bei dem sich die Sende-Empfangs-Vorrichtungen 302 mit der Referenz-Sende-Vorrichtung 202 synchronisieren, kann eine regelmäßige Zeit-Abgleichmöglichkeit zwischen der Referenz-Sende-Vorrichtung 202 und den Sende-Empfangs-Vorrichtungen 302 vorgesehen werden.

Die Signalerzeugungseinrichtung 310 zum Erzeugen des Informationssignals ist vorzugsweise eine analoge oder digitale Verarbeitungseinrichtung, wie z. B. eine Verarbeitungseinrichtung, die ein Informationssignal erzeugt, das die Sendezeit des Informationssignals aufweist. Die Signalerzeugungseinrichtung 310 kann ferner angeordnet sein, um ein Informationssignal zu erzeugen, das ferner die Position der Sende-Empfangs-Vorrichtung 302 aufweist. Das Informationssignal kann ferner lokale Informationen für den Bereich des Netzes der Referenz-Sende-Vorrichtung 202 und der Sende-Empfangs-Vorrichtungen 302 bzw. für den Bereich, in dem sich das Objekt der Positionsbestimmungsvorrichtung 502 befindet bzw. bewegt, lokale Meldungen, spezifische Systemparameter, Synchronisierungsdaten, einen Umgebungs- und Gebäudeplan und/oder Verzeichnisse von Referenz-Sende-Vorrichtungen 202 und/oder Funkbalken aufweisen.

Die Sendeeinrichtung 312 der Sende-Empfangs-Vorrichtung 302 weist vorzugsweise eine Codelieferungseinrichtung 314 zum Liefern eines Codes, der der Sende-Empfangs-Vorrichtung 302 zugeordnet ist und der sich von den Codes der anderen Sende-Vorrichtungen 202, 302 unterscheidet, und eine Codierungseinr'ichtung 316 zum Codieren des Informationssignals mit dem Code auf.

Die Codelieferungseinrichtung 314 der Sendeeinrichtung 312 ist vorzugsweise ein Speicher, der ein analoges oder digitales Codesignal enthält, das den Code darstellt. Dieser Code ist vorzugsweise ein rauschähnlicher Code, der sowohl in der jeweiligen Sende-Empfangs-Vorrichtung 302 als auch in der Positionsbestimmungsvorrichtung 502 unabhängig voneinander wiedererzeugt werden kann. Zu den rauschähnlichen Codes gehören sogenannte Codes maximaler Länge (m-Sequenzen). Andere mögliche Codes sind beispielsweise die Gold-Sequenzen.

Die Codierungseinrichtung 316 der Sendeeinrichtung 312 ist vorzugsweise eine synchrone Operation oder eine Exklusiv-Oder-Einrichtung (EXCLUSIVE-OR), die den Code der Codelieferungseinrichtung 314 mit dem Informationssignal der Sende-Empfangs-Vortichtung 302 zusammenaddiert bzw. zusammenführt. Durch die Multiplikation des Informationssignals mit dem Code wird das Informationssignal gespreizt und es wird eine gleichmäßige Verteilung der Signalleistung über das gespreizte Frequenzband erreicht. Zur Rückgewinnung des gespreizten informationssignals wird dieses in der Positionsbestimmungsvorrichtung 502 mit dem zur Spreizung verwendeten Code korreliert. Hierzu wird der in der Sende-Empfangs-Vorrichtung 302 erzeugte Code phasenrichtig auf den Empfangscode synchronisiert und mit dem Empfangssignal multipliziert. Das gespreizte Empfangs-Informationssignal wird damit wieder auf die ursprünglichen Bandbreite dekorreliert. Dem Signal überlagerte Störungen werden dagegen spektral gespreizt und können beispielsweise durch eine nachfolgende Signalintegration oder eine Tiefpaßfilterung in ihrer Amplitude entsprechend dem Bandbreitenverhältnis reduziert werden.
Die Sendeeinrichtung 312 der Sende-Empfangs-Vorrichtung 302 kann ferner eine Modulationseinrichtung 318 zum Modulieren des Informationssignals auf ein Trägersignal, das eine Trägerfrequenz f_{TR} aufweist, die vorzugsweise gleich der Trägerfrequenz der Referenz-Sende-Vorrichtung 202 ist, umfassen. Die Modulationseinrichtung 318 ist vorzugsweise eine Mischeinrichtung bzw. eine Multiplikationseinrichtung, die das Informationssignal auf das Trägersignal moduliert, wobei das Trägersignal vorzugsweise ein Hochfrequenz-Trägersignal (HF-Trägersignal) ist. Die Modulationseinrichtung 318 kann beispielsweise eine Phasenumtastungs-Modulation (PSK-Modulation oder BPSK-Modulation) zum Modulieren des Informationssignals auf das Trägersignal durchführen. Es können jedoch auch andere bekannte Modulationsverfahren verwendet werden.

Die Sende-Empfangs-Vorrichtung weist vorzugsweise ferner eine Antenne 320 auf, die unter anderem zum Senden des Hochfrequenz-Trägersignals verwendet werden kann.

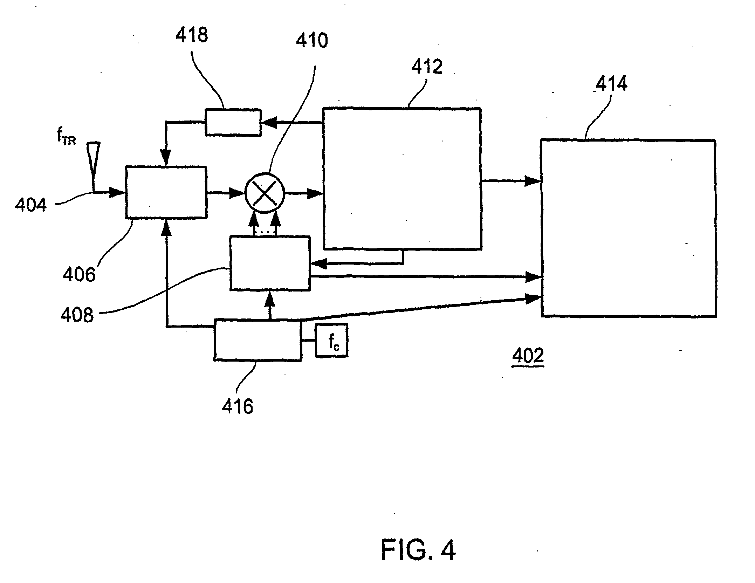

Fig. 4 zeigt eine allgemeine Darstellung einer Positionsbestimmungsvorrichtung des Systems der vorliegenden Erfindung von Fig. 1. Die Positionsbestimmungsvorrichtung 402 weist eine Antenne 404 zum Empfangen der Informationssignale, beispielsweise der HF-Informationssignale, der Sende-Vorrichtungen 202, 302 als ein (HF-) Empfangssignal auf. Dieses Empfangssignal wird von der Antenne 404 zu einem Radio-Frontend 406 bzw. einer Funk-Eingangsstufe weitergeleitet. Dieses Radio-Frontend 406 umfaßt beispielsweise eine Mischeinrichtung, die das Hochfrequenz-Empfangssignal in das Basisband mischt. Dieses Mischen kann analog oder analog/digital mit einer Zwischenfrequenz-Abtastvorrichtung bzw. einem IF-Sampler realisiert werden. Die Weiterverarbeitung erfolgt dann digital. Im Basisband erfolgt die Korrelation des Empfangssignals mit einer definierten Anzahl von Codes, wobei jeder dieser Codes einer Sende-Vorrichtung 202, 302 (Fig. 1) zugeordnet ist. Diese Codes werden in einem CodeGenerator 408 entsprechend den Codes der Sende-Vorrichtungen erzeugt. Für jeden Code wird das Empfangssignal mit einem oder mehreren Korrelatoren in einem Korrelationsabschnitt 410 und in einem ersten Verarbeitungsabschnitt 412 korreliert, um einzelne Empfangs-Informationssignale, die den Informationssignalen der Sende-Vorrichtungen zugeordnet sind, aus dem Empfangssignal durch Korrelation zu erhalten. Das mit den einzelnen Codes in dem Korrelationsabschnitt 410 korrelierte Empfangssignal wird in den ersten Verarbeitungsabschnitt 412 der Positionsbestimmungsvorrichtung 402 gespeist, in dem die abschließende Korrelation der Codes mit dem Empfangssignal und die Ableitung der zugeordneten Empfangs-Informationssignale erfolgt. Dabei müssen auch Mehrwegsignale, die durch die Reflexion der durch die Sende-Vorrichtungen 202, 302 gesendeten Informationssignale, z. B. von Wänden, entstehen, von den Sichtlinien-Signalen bzw. Line-of-Sight-Signalen getrennt werden, um für jede Sende-Vorrichtung 202, 302 das Informationssignal zu erhalten, das sich auf dem direkten Weg zu der Positionsbestimmungsvorrichtung ausgebreitet hat. Nur mit diesem Signal ist eine korrekte Laufzeitbestimmung des jeweiligen Informationssignals und eine Positionsbestimmung des Objekts möglich. Der erste Verarbeitungsabschnitt 412 der Positionsbestimmungsvorrichtung 402 übernimmt ferner die Code-Ansteuerung des Code-Generators 408, um die Korrelation des Codes mit dem Empfangssignal in dem Korrelationsabschnitt 410 zu steuern, und steuert ferner über eine automatische Verstärkungssteuerung (AGC; AGC = Automatic Gain Control) 418 die Verstärkung des Empfangssignals, das abhängig von der Beschaffenheit der Umgebung der Positionsbestimmungsvorrichtung 402, d. h. vor allem abhängig von dem Auftreten von Mehrwegsignalen und Störungen, unterschiedlich groß ist und eine hohe Dynamik besitzt. Die erhaltenen Empfangs-Informationssignale werden an einen zweiten Verarbeitungsabschnitt 414 der Positionsbestimmungsvorrichtung 402 weitergeleitet, der das jeweilige Empfangs-Informationssignal, ohne die Mehrwegsignale, verfolgt und mit den anderen Empfangs-Informationssignalen zeitlich synchronisiert und decodiert, um aus den jeweiligen Empfangs-Informationssignalen neben anderen Informationen die Sendezeiten der Informationssignale, die den Empfangs-Informationssignalen zugeordnet sind, und vorzugsweise ferner die Positionen der Sende-Vorrichtungen 202, 302 zu erhalten, um damit die Position des Objekts zu dem entsprechenden Zeitpunkt zu bestimmen. Der zweite Verarbeitungsabschnitt 414 der Positionsbestimmungsvorrichtung 402 übernimmt ferner die Navigation des Objekts, indem Navigationsanweisungen, Navigationssignale etc. durch den zweiten Verarbeitungsabschnitt 414 ausgegeben werden, und kann beispielsweise ein digitaler Signalprozessor sein. Der Codegenerator 408 kommuniziert mit dem zweiten Verarbeitungsabschnitt 414, um die den jeweiligen Code zugeordneten Empfangs-Informationssignale identifizieren zu können. Die Positionsbestimmungsvorrichtung 402 weist ferner einen Synthesizer bzw. ein Frequenzerzeuger 416 mit der Frequenz f_{c} auf, der die zeitliche Steuerung des Radio-Frontends 406, des Code-Generators 408 und des zweiten Verarbeitungsabschnitts 414 der Positionsbestimmungsvorrichtung 402,übernimmt.

Die Ausbreitung von Mehrwegsignalen, die Reflexionen der Informationssignale der Sende-Vorrichtung 202, 302, z. B. in Innenbereichen an Innenwänden oder in abgeschatteten Außenbereichen an Außenwänden von Gebäuden, sind, und die Signaldynamik des aus den einzelnen Empfangs-Informationssignalen zusammengesetzten Empfangssignals der Positiönsbestimmungsvorrichtung 402, die durch die unterschiedliche Amplitude des Empfangssignals, beispielsweise durch Reflexionen, unterschiedliche Umgebungsbedingungen bezüglich der Dämpfung etc., verursacht wird, stellen höchste Ansprüche an die Positionsbestimmungsvorrichtung. Es ist durch die unterschiedliche Struktur von Innenbereichen bzw. Räumen allgemein sehr schwierig, die Ausbreitungsbedingungen der Informationssignale generell zu definieren. Die Informationssignale werden durch die Entfernung, durch flaches Fading, feste und zeitvariante Hindernisse unterschiedlich gedämpft. Die Dämpfung kann bis zu 80 dB betragen. Die Mehrwegausbreitung ist daher durch sehr große Dynamikunterschiede gekennzeichnet. Die hohen Dynamikanforderungen werden in der Positionsbestimmungsvorrichtung 402 durch die von dem ersten Verarbeitungsabschnitt 412 gesteuerte Regelschleife (AGC) 418 und durch die Verwendung eines AD-Umsetzers mit einer Auflösung von ca. 10 Bit und einer Abtastrate, deren Periodendauer kleiner ist als die aufzulösenden Laufzeitunterschiede, gelöst. Die Mehrwegsignale werden dann mit einer angepaßten Entscheidungseinrichtung separiert.

Es sei bemerkt, daß die Navigationsdaten bzw. Informationsdaten eine sehr niedrige Datenrate (F_{INF}) besitzen. Um einen ausreichenden Verarbeitungsgewinn bzw. Processing Gain sicherzustellen, muß jedoch die Datenrate der Informationsdaten f_{INF} deutlich kleiner als die Bandbreite des Informationssignals sein. Das Informationssignal wird dann direkt auf die Trägerfrequenz (f_{TR}) phasenstarr moduliert. Um den Übertragungskanal des Informationssignals effizient nutzen zu können, eignen sich hierzu insbesondere PSK-Modulationsverfahren, wie z. B. das BPSK-Modulationsverfahren.

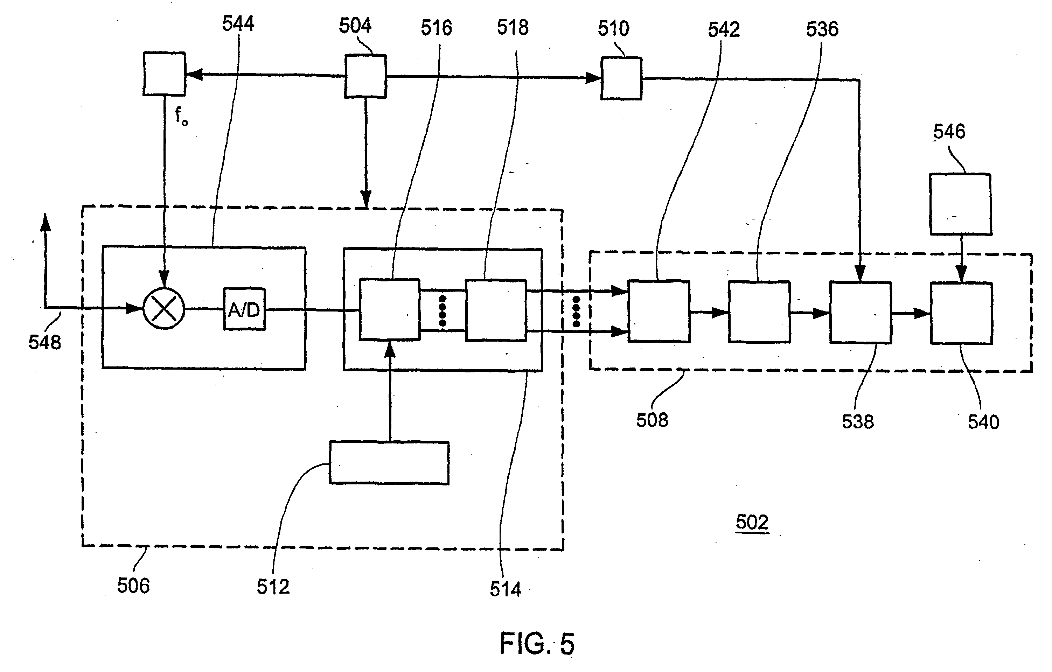

Fig. 5 zeigt ein Ausführungsbeispiel einer Positionsbestimmungsvorrichtung 502 des Systems der vorliegenden Erfindung von Fig. 1. Die Positionsbestimmungsvorrichtung 502 umfaßt vorzugsweise'eine Zeit-Lieferungseinrichtung 504 zum Liefern eines Zeitsignals, das eine Uhrzeit angibt, eine Empfangseinrichtung 506 zum Empfangen eines Empfangssignals, das die Empfangs-Informationssignale der Sende-Vorrichtungen 202, 302 aufweist, eine Verarbeitungseinrichtung 508 zum Verarbeiten der Empfangs-Informationssignale und eine Empfangszeit-Bestimmungseinrichtung 510 zum Bestimmen der Empfangszeit jedes Empfangs-Informationssignals mit dem Zeitsignal der Zeit-Lieferungseinrichtung 504.

Die Zeit-Lieferungseinrichtung 504 ist vorzugsweise ein Taktgeber oder eine Uhr etc., die eine Zeitbasis zum Bestimmen einer Uhrzeit bzw. eines Zeitpunkts liefert.

Die Empfangseinrichtung 506 der Positionsbestimmungsvorrichtung 502 umfaßt vorzugsweise eine Codelieferungseinrichtung 512 zum Liefern der Codes der Sende-Vorrichtungen 202, 302 und eine Decodierungseinrichtung 514 zum Decodieren des Empfangssignals unter Verwendung der von der Codelieferungseinrichtung 512 gelieferten Codes der Sende-Vorrichtungen 202, 302, um den Informationssignalen der Sende-Vorrichtungen 202, 302 entsprechende Empfangs-Informationssignale aus dem Empfangssignal zu erhalten.

Die Codelieferungseinrichtung 512 der Empfangseinrichtung 506 ist vorzugsweise ein Speicher, der analoge oder digitale Codesignale enthält, die die Codes der Sende-Vorrichtungen 202, 302 darstellen, wobei die Codes vorzugsweise rauschähnliche Codes (PN-Codes) sind. Hierzu gehören die sogenannten Codes maximaler Länge (m-Sequenzen) oder andere mögliche Codes, wie z. B. Gold-Sequenzen.

Die Decodierungseinrichtung 514 der Empfangseinrichtung 506 umfaßt für jede Sende-Vorrichtung 202, 302 des Systems 100 vorzugsweise mindestens eine Korrelationseinrichtung 516 zum Korrelieren des Empfangssignals mit dem Code, der der jeweiligen Sende-Vorrichtung 202, 302 zugeordnet ist und der in der Codelieferungseinrichtung 512 verfügbar ist, um ein korreliertes. Empfangssignal zu erhalten, und jeweils eine der Korrelationseinrichtung 516 zugeordnete Integrationseinrichtung 518, die jedes Korrelationsergebnis der Korrelation des Empfangssignals mit jedem zugeordneten Code über eine Zeit, die vorzugsweise einer Periode einer Codesequenz entspricht, integriert, um ein der jeweiligen Sende-Vorrichtung 202, 302 zugeordnetes Empfangs-Informationssignal zu erhalten.

In der Korrelationseinrichtung 516 wird das Empfangssignal um je einen Takt verschoben und dann parallel mit jedem Code in der Codelieferungseinrichtung 512 korreliert. Diese Codelieferungseinrichtung 512 enthält jeden einer Sende-Vorrichtung 202, 302 zugeordneten Code in einem zugeordneten Schieberegister, wobei der Code darin mit einer schnellen Taktrate, die größer als die Chipping-Rate ist, verschoben wird. Bei einer Synchronisation des Eingangssignals mit dem jeweiligen Inhalt eines Schieberegisters entsteht ein Korrelationspeak am Ausgang der Integrationseinrichtung 518.

Für die Empfangseinrichtung 506 ist jede Sende-Vorrichtung 202, 302 ein Satellit, unabhängig davon, ob nur Sende-Empfangs-Vorrichtungen 302 oder auch Referenz-Sende-Vorrichtungen 202 im Netz verwendet werden. Für eine 3-D-Lokalisierung müssen vier verschiedene Signale und für eine 2-D-Lokalisierung nur drei verschiedene Signale in der Empfangseinrichtung unabhängig von welcher Sende-vorrichtung 202, 302 in der Auswertung berücksichtigt werden. Dies bedeutet, daß vorzugsweise mehr als vier bzw. drei Korrelationseinrichtungen 516 und zugeordnete Integrationseinrichtungen 518 vorgesehen werden sollten, um mit höherer Sicherheit vier bzw. drei Signale von verschiedenen Sende-Vorrichtungen 202, 302 im Empfangssignal decodieren zu können. Für jede zu empfangende Sende-Vorrichtung 202, 302 ist daher mindestens eine Korrelationseinrichtung 516 und eine zugeordnete Integrationseinrichtung 518 in der Decodierungseinrichtung 514 vorzusehen. Zur schnelleren Korrelation können auch mehr als eine Korrelationseinrichtung 516 und Integrationseinrichtung 518 pro Sende-Vorrichtung 202, 302 enthalten sein.

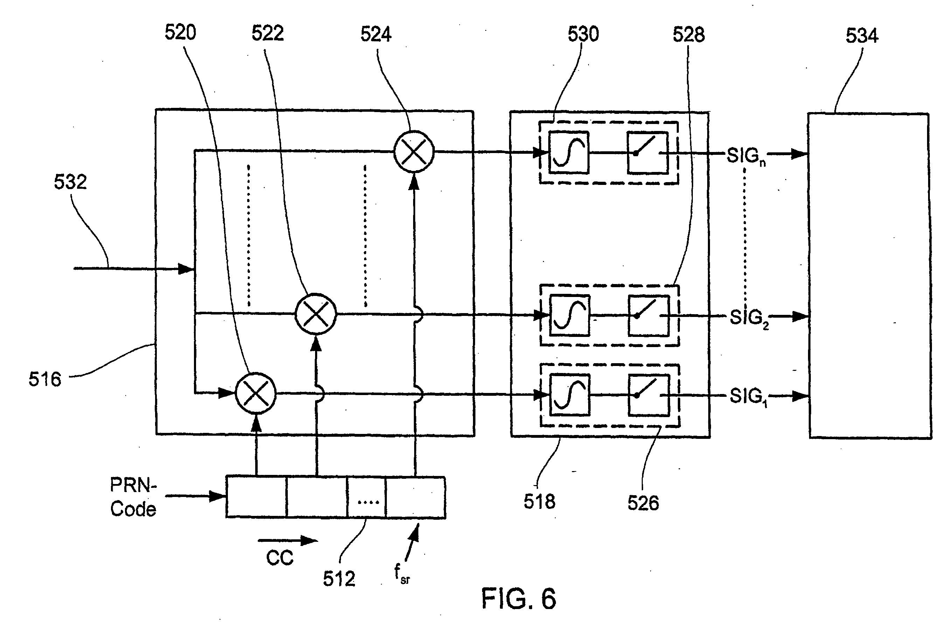

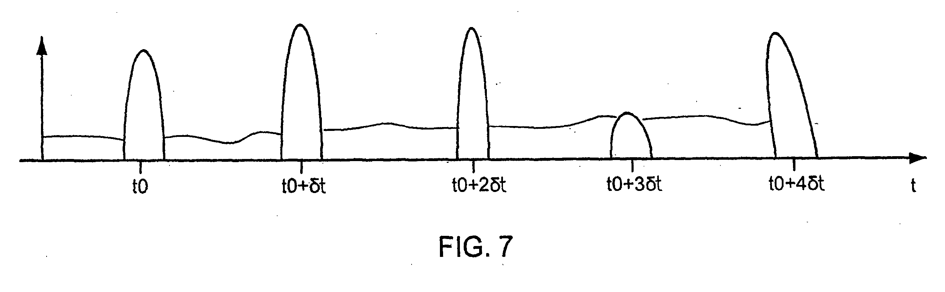

Fig. 6 zeigt ein Ausführungsbeispiel der Korrelationseinrichtung 516 und der Integrationseinrichtung 518 der Decodierungseinrichtung 514 von Fig. 5. Jede einem Code bzw. einer Sende-Vorrichtung 202, 302 zugeordnete Korrelationseinrichtung 516 umfaßt einen Korrelator 520 zum Korrelieren des Codes mit dem Empfangssignal, um ein korreliertes Empfangssignal zu erhalten, und jede einem Code bzw. einer Sende-Vorrichtung 202, 302 zugeordnete Integrationseinrichtung 518 umfaßt einen Integrator 526, der dem Korrelator 520 zugeordnet ist, zum Integrieren des korrelierten Empfangssignals des Korrelators 520 über die Zeit, um das dem Code bzw. der Sende-Vorrichtung 202, 302 zugeordnete Empfangs-Informationssignal zu erhalten. Jede einer Sende-Vorrichtung 202, 302 zugeordnete Korrelationseinrichtung 516 umfaßt ferner einen weiteren Korrelator 522 zum Korrelieren des zeitversetzten Codes mit dem Empfangssignal, um ein korreliertes Empfangssignal zu erhalten, und jede einer Sende-Vorrichtung 202, 302 zugeordnete Integrationseinrichtung 518 umfaßt ferner einen dem weiteren Korrelator 522 zugeordneten Integrator 528 zum Integrieren des korrelierten Empfangssignals über die Zeit, um ein dem Code zugeordnetes zeitversetztes Empfangs-Informationssignal bzw. Mehrwegsignal zu erhalten, das sich von dem Empfangs-Informationssignal unterscheidet, das auf einem direkten Weg zu der Positionsbestimmungsvorrichtung 502 gelangt ist. Jede Korrelationseinrichtung 516 weist mindestens drei und vorzugsweise mehr als drei weitere Korrelatoren 522, ..., 524 und mindestens drei und vorzugsweise mehr als drei weitere den weiteren Korrelatoren 522, ...,524 zugeordnete Integratoren 528, ..., 530 in der Integrationseinrichtung 518 auf. Die Erhöhung der Anzahl der Korrelatoren und der zugeordneten Integratoren ermöglicht eine feinere Auflösung der Flanken und möglicher Nebenmaxima des Korrelationspeaks. Nebenmaxima erscheinen bei einem Empfang von Mehrwegsignalen bzw. bei einem Mehrweg-Empfang. Das Ausführungsbeispiel in Fig. 6 erlaubt damit eine Bestimmung des "Line of Sight"-Signals und von Mehrwegsignalen, die in Fig. 7 zeitlich aufgetragen sind.

Die Anzahl der Korrelatoren bzw. die Anzahl der zugeordneten Integratoren ist anders als beispielsweise bei dem GPS-System (Early, Present, Late : EPL-Struktur) nicht fest definiert und hängt von dem Zeitraum, in dem das System die Mehrwegsignale erkennen und decodieren soll, oder anders ausgedrückt stark von den Eigenschaften der Umgebung, in der das System eingesetzt wird, z. B. von Gebäuden oder Räumen, ab. Die Anzahl der Korrelatoren kann je nach Umgebung oder Gebäude sehr groß werden. Es ist auch vorstellbar, daß für jeden Raum oder jedes getrennte Gebäude eine unterschiedliche Korrelatorenanzahl benötigt oder genutzt wird, und daß diese Anzahl als Systemparameter in das Navigationsendgerät als Variable beim Betreten des Gebäudes über Funkbalken, Funk, manuelle Eingabe etc. geliefert wird. Das Endgerät stellt dann automatisch die richtige Konfiguration über Software etc. ein. Die Anzahl der benötigten oder genutzten Korrelatoren kann also variabel sein.

Die Codelieferungseinrichtung 512 weist für jeden zugeordneten Code jeweils ein Schieberegister mit nr Bit auf, das den zeitlichen Versatz des Codes realisiert. In dem nr Bit breiten Schieberegister 512 wird der Code jeweils um ein Inkrement der Chiplänge (CC) mit einer Taktrate (fₛᵣ) verschoben. Nach der Korrelation des Empfangssignals mit dem Inhalt des Schieberegisters 508 wird das korrelierte Empfangssignal in der Integrationseinrichtung 528 integriert. Die Länge des Schieberegisters (nr) bzw. die Anzahl der Korrelatoren und der zugeordneten Integratoren und die Taktrate (fₛᵣ) definieren den Zeitraum, in dem die Mehrwegsignale getrennt voneinander decodiert werden können, und die Auflösung mit der dies erfolgen kann. Eine Positionsäuflösung mit einer Genauigkeit von einer halben Wellenlänge der Trägerfrequenz kann unter der Bedingung erfolgen, daß die Trägerfrequenz mit der Chipping-Rate synchronisiert ist. Dadurch bleibt die Information der Phasenlage des Trägersignals trotz Abwärtsmischung, Abtastung und Verarbeitung weiter erhalten. An jedem Korrelator 520, ..., 524 der Korrelationseinrichtung 516 steht beispielsweise ein Basisbandsignal 532 bitweise am Eingang des jeweiligen Korrelators 520, ..., 524 an, und der Code der jeweiligen Sende-Vorrichtung 202, 302 wird mit der Taktrate fₛᵣ über das Signal geschoben (korreliert), um damit die "Spitzen" bzw. die Höhen der Korrelationspeaks des Informationssignals und der zugeordneten Mehrwegsignale zu erhalten. Diese Korrelationsergebnisse sind in Fig. 6 als STG₁, STG₂, ..., SIG_{N} dargestellt. In der der Integrationseinrichtung 518 folgenden digitalen Signalverarbeitung 534 wird das Signal verfolgt, um die Spitze bzw. den Peak des Sichtlinien-Signals zu finden. Es sei bemerkt, daß das Informationssignal nicht unbedingt die stärkste bzw. höchste Spitze aufweisen muß.

Fig. 7 zeigt den zeitlichen Verlauf nach der Integration durch die Integrationseinrichtung 518, wobei der Verlauf die einzelnen Spitzen eines Empfangs-Informationssignals und seiner Mehrwegsignale aufweist. In Fig. 7 sind bei t0 das Empfangs-Informationssignal und bei t0 + δt, t0 + 2δt, t0 + 3δt und t0 + 4δt die Mehrwegsignale zu erkennen. Diese Spitzen ergeben sich aus der Korrelation des Empfangssignals mit dem zugeordneten Code einer Sende-Vorrichtung, wodurch eine Entspreizung des Empfangs-Informationssignals bzw. der Mehrwegsignale erfolgt und eine Spitze entsteht, die jeweils aus dem ebenfalls in Fig. 7 gezeigten Rauschen hinausragt. Der minimale zeitliche Abstand δ zwischen den Korrelationspeaks, der aufgelöst werden kann, entspricht der Periodenlänge des Taktsignals, mit dem ein Analog-Digital-Wandler betrieben wird.

Zurückkehrend zu Fig. 5 umfaßt die Empfangszeit-Bestimmungseinrichtung 510 der Positionsbestimmungsvorrichtung 502 vorzugsweise ferner eine Einrichtung, die aus dem zeitsignal der Zeitlieferungseinrichtung 504 und dem Ereignis des Erfassens des Empfangs-Informationssignals in dem Empfangssignal eine Empfangszeit des Empfangs-Informationssignals bestimmt.

Die Verarbeitungseinrichtung 508 der Positionsbestimmungsvorrichtung 502 umfaßt vorzugsweise eine Extrahierungseinrichtung 536 zum Extrahieren der Sendezeiten der Informationssignale der Sende-Vorrichtungen 202, 302 aus den Empfangs-Informationssignalen, eine Laufzeit-Bestimmungseinrichtung 538 zum Bestimmen der Laufzeiten der Informations signale von den Sende-Vorrichtungen 202, 302 zu der Positionsbestimmungsvorrichtung 502 aus den Sendezeiten der Informationssignale und den Empfangszeiten der Empfangs-Informationssignale, und eine Berechnungseinrichtung 540 zum Berechnen der Position des Objekts unter Verwendung der Laufzeiten der Informationssignale und der Positionen der Sende-Vorrichtungen 202, 302.

Die Extrahierungseinrichtung 536 zum Extrahieren der Sendezeiten der Informationssignale weist vorzugsweise eine verarbeitungseinrichtung auf, die die Sendezeiten der Informationssignale aus den Informationssignalen extrahiert. Wenn die Informationssignale weitere Informationen, wie die Positionen der Sende-Vorrichtungen 202, 302, aufweisen, ist die Verarbeitungseinrichtung ferner angeordnet, um diese Informationen dem jeweiligen Informationssignal zu entnehmen.

Die Laufzeit-Bestimmungseinrichtung 538 zum Bestimmen der Laufzeiten der Informationssignale weist vorzugsweise eine Verarbeitungseinrichtung auf, die die Differenz der Sendezeit eines Informationssignals zu der Empfangszeit eines Informationssignals bzw. des Emprangs-Informationssignals bestimmt. Dabei kommt es, wie erwähnt, nicht darauf an, ob die Zeit-Lieferungseinrichtung 504 der Positionsbestimmungsvorrichtung 502 mit den Zeit-Lieferungseinrichtungen 204, 304 der Sende-Vorrichtungen 202, 302 synchronisiert ist, da es ausreicht, daß die innere Zeit-Lieferungseinrichtung 504 der Positionsbestimmungsvorrichtung 502 in einem bestimmten Bereich eine genaue Empfangszeit der Empfangs-Informationssignale angibt. Die zeitliche Synchronisierung der Empfangszeit der Empfangs-Informationssignale mit den zeitlieferungseinrichtungen 204, 304 der Sende-Vorrichtungen 202, 302 wird berechnungsmäßig durch beispielsweise ein Gleichungssystem erreicht, das der Berechnungseinrichtung 540 zugeführt wird, wobei z. B. bei der dreidimensionalen Positionsbestimmung die vierte Sende-Vorrichtung 202, 302 die Bestimmung der genauen Empfangszeit aus dem Gleichungssystem durch eine vierte Bedingung ermöglicht.

Die Berechnungseinrichtung 540 der Verarbeitungseinrichtung 508 weist vorzugsweise eine Verarbeitungseinrichtung auf, die angeordnet ist, um beispielsweise ein Gleichungssystem der Laufzeiten L1, L2, L3 und L4 der informationssignale und der bekannten Positionen P1, P2, P3 und P4 (Fig. 1) der Sende-Vorrichtung 202, 302 aufzustellen und zu lösen.

Die Verarbeitungseinrichtung 508 umfaßt vorzugsweise ferner eine Mehrwegsignalfilterungs- und Datenrückgewinnungs-Einrichtung 542 zum Extrahieren der Empfangs-Informationssignale bzw. zum Demodulieren und Decodieren der Empfangs-Informationssignale, um sich auf ein Empfangsinformationsformat bzw. ein Navigationsdatenformat zu synchronisieren und gegebenfalls die Informationsdaten weiter an die Extrahierungseinrichtung 536 zu leiten. Die Synchronisation wird gegebenenfalls sichergestellt und beibehalten, und die Daten werden zur Decodierung weitergeleitet. An dem Eingang der Mehrwegsignalfilterungs- und Datenrückgewinnungs-Einrichtung 542 liegen Datenwerte STG₁, SIG₂, ..., SIG_{N} (Fig. 6) aus der Integrationseinrichtung 518 an, und für jeden Code einer Sende-Vorrichtung 202, 302 werden parallel die Korrelationspeaks von Mehrwegsignalen erkannt. Das richtige Signal wird für die weitere Signalverarbeitung selektiert und für die Auswertung weitergeleitet. Für jeden Code werden die Signale auf Synchronisation geprüft und die Informationsdaten werden gegebenenfalls extrahiert.

Die Empfangseinrichtung 506 der Positionsbestimmungsvorrichtung 502 umfaßt ferner vorzugsweise eine Mischeinrichtung 544 zum Mischen des Empfangssignals, das die Empfangs-Informationssignale der Sende-Vorrichtungen 202, 302 aufweist, die auf das Trägersignal moduliert sind, in ein zwischensignal bzw. in das Basisband. Ein Analog/Digital-Wandler liefert die digitalen komplexen Daten zu der Decodierungseinrichtung 514.

Die Positionsbestimmungsvorrichtung 502 umfaßt vorzugsweise ferner einen Speicher 546 zum Speichern der Positionen der Sende-Vorrichtungen 202, 302 und alternativ zum Speichern von sowohl den Positionen der Sende-Vorrichtungen 202, 302 als auch von Gebäudeplänen oder Umgebungsplänen, um die Position des Objekts in einem Gebäude oder in einer Umgebung anzuzeigen. zur Ausgabe dieser gespeicherten Informationen und der durch die Empfangs-Informationssignale gelieferten Informationen kann die Positionsbestimmungsvorrichtung 502 ferner eine Informationsausgabeeinheit zum Ausgeben von Informationen über die Position, die von der Berechnungseinrichtung 540 der Verarbeitungseinrichtung 508 der Positionsbestimmungsvorrichtung 502 bestimmt wird, des Gebäudeplans oder des Umgebungsplans, der in dem Speicher 546 der Positionsbestimmungsvorrichtung 502 gespeichert ist und/oder von optischen und akustischen Orientierungshilfen und/oder Orientierungsanweisungen bzw. Navigationsanweisungen aufweisen.

Die Positionsbestimmungsvorrichtung 502 umfaßt vorzugsweise ferner eine Antenne 548 zum Empfangen des Empfangssignals und zum Weiterleiten an die Mischeinrichtung 544, und die Verarbeitungseinrichtung 514 der Positionsbestimmungsvorrichtung 502 kann ferner ein Mehrwegmodulfilter zum Filtern der Empfangs-Informationssignale, um den Empfangs-Informationssignalen überlagerte Störsignale, die im gleichen Frequenzband liegen, und Mehrwegsignale voneinander zu trennen, aufweisen.

Wie bereits erwähnt umfaßt das System 100 zur Bestimmung der Position eines Objekts ferner vorzugsweise eine Verbindungseinrichtung zum Verbinden der Sendeeinrichtung 208 der Referenz-Sende-Vorrichtung 202 mit der Empfangseinrichtung 306 von jeder Sende-Empfangs-Vorrichtungen 302 und zum Übertragen des Referenzzeit-Signals zu den Sende-Empfangs-Vorrichtungen 302, um die Uhrzeit jeder Sende-Empfangs-Vorrichtung 302 mit der Referenz-Uhrzeit der Referenz-Sende-Vorrichtung 202 mittels der Synchronisierungseinrichtung 308 jeder Sende-Empfangs-Vorrichtung 302 zu synchronisieren. Die Verbindungseinrichtung kann dabei eine drahtlose Verbindung, wie z. B. über ein Hochfrequenz-Signal, oder eine drahtgebundene bzw. kabelgebundene Verbindung, wie z. B. mit einem elektrischen oder einem optischen Kabel, sein. wie ebenfalls bereits erwähnt wurde kann das System 100 auch ausschließlich aus Sende-Empfangs-Vorrichtungen 302 bestehen, aus denen einzelne Sende-Empfangs-Vorrichtungen 302 zu Referenz-Sende-Vorrichtungen bzw. Referenz-Sende-Empfangs-Vorrichtungen bestimmt werden. In diesem Fall ist die Verbindungseinrichtung zwischen beispielsweise einer Sendeeinrichtung 312 einer Sende-Empfangs-Vorrichtung 302 und Empfangseinrichtungen 306 untergeordneter Sende-Empfangs-Vorrichtungen 302 vorgesehen usw.

Die vorliegende Erfindung ermöglicht eine einfache und sehr genaue Bestimmung der Position eines Objekts im Außen- und Innen-Bereich und kann vor allem zur Navigation bzw. Ortung in Gebäuden bzw. Gebäusekomplexen vorteilhaft eingesetzt werden.

## Patentansprüche

1. System (100) zur Bestimmung der Position eines Objekts, mit folgenden Merkmalen:
einer Referenz-Sende-Vorrichtung (202), die in einer festen Position angeordnet ist, wobei die Referenz-Sende-Vorrichtung (202) folgende Merkmale aufweist:
a) eine Referenzzeit-Lieferungseinrichtung (204) zum Liefern eines Referenzzeit-Signals, das eine Referenz-Uhrzeit angibt;
b) eine erste Signalerzeugungseinrichtung (206) zum Erzeugen eines ersten Informationssignals, das mindestens die Sendezeit des ersten Informationssignals, die aus dem Referenz-zeitsignal bestimmt wird, aufweist; und
c) eine erste Sendeeinrichtung (208) zum Senden des ersten Informationssignals und/oder des Referenzzeit-Signals, wobei die erste Sendeeinrichtung (208) folgende Merkmale aufweist:
c1) eine erste Codelieferungseinrichtung (210) zum Liefern eines ersten Codes, der der Referenz-Sende-Vorrichtung (202) zugeordnet ist; und
c2) eine erste Codierungseinrichtung (212) zum Codieren des ersten Informationssignals mit dem ersten Code;
zwei oder mehr Sende-Empfangs-Vorrichtungen (302), die in festen Positionen zueinander und zu der Referenz-Sende-Vorrichtung (202) angeordnet sind, wobei jede Sende-Empfangs-Vorrichtung (302) folgende Merkmale aufweist:
d) eine erste Zeit-Lieferungseinrichtung (304) zum Liefern eines ersten Zeitsignals, das eine erste Uhrzeit angibt;
e) eine erste Empfangseinrichtung (306) zum Empfangen des Referenzzeit-Signals von der Referenz-Sende-Vorrichtung (202);
f) eine Synchronisierungseinrichtung (308) zum Verarbeiten des ersten Zeitsignals und des Referenzzeit-Signals und zum Synchronisieren der ersten Uhrzeit mit der Referenz-Uhrzeit unter Berücksichtigung der Laufzeiten des Referenzzeit-Signals von der Referenz-Sende-Vorrichtung (202) zu der Sende-Empfangs-vorrichtung (302);
g) eine zweite Signalerzeugungseinrichtung (310) zum Erzeugen eines zweiten Informationssignals, das mindestens die Sendezeit des zweiten Informationssignals, die aus dem ersten Zeitsignal bestimmt wird, aufweist; und
h) eine zweite Sendeeinrichtung (312) zum Senden des zweiten Informationssignals, wobei die zweite Sendeeinrichtung (312) folgende Merkmale aufweist:
h1) eine zweite Codelieferungseinrichtung (314) zum Liefern eines zweiten Codes, der der Sende-Empfangs-Vorrichtung (302) zugeordnet ist, und der sich von dem ersten Code der Referenz-Sende-Vorrichtung (202) und den zweiten Codes der anderen Sende-Empfangs-Vorrichtungen (302) unterscheidet; und
h2) eine zweite Codierungseinrichtung (316) zum Codieren des zweiten Informationssignals mit dem zweiten Code; und
einer Positionsbestimmungsvorrichtung (502) zum Bestimmen der Position des objekts, wobei das Objekt die Positionsbestimmungsvorrichtung (502) aufweist, und die Positionsbestimmungsvorrichtung (502) folgende Merkmale aufweist:
i) eine zweite Zeit-Lieferungseinrichtung (504) zum Liefern eines zweiten Zeitsignals, das eine zweite Uhrzeit angibt;
j) eine zweite Empfangseinrichtung (506) zum Empfangen eines Empfangssignals, das das erste Informationssignal und die zweiten Informationssignale aufweist, wobei die zweite Empfangseinrichtung (506) folgende Merkmale aufweist:
j1) eine dritte Codelieferungseinrichtung (512) zum Liefern des ersten Codes und der zweiten Codes;
j2), eine Decodierungseinrichtung (514) zum Decodieren des Empfangssignals unter Verwendung des von der dritten Codelieferungseinrichtung (522) gelieferten ersten Codes und der von der dritten Codelieferungseinrichtung (522) gelieferten zweiten Codes, um dem ersten Informationssignal und den zweiten Informationssignalen entsprechende Empfangs-Informationssignale zu erhalten; und
j3) eine Empfangszeit-Bestimmungseinrichtung (510) zum Bestimmen der Empfangszeit jedes Empfangs-Informationssignals mit dem zweiten Zeitsignal der zweiten Zeit-Lieferungseinrichtung (504); und
k) eine Verarbeitungseinrichtung (508) zum Verarbeiten der Empfangs-Informationssignale, wobei die Verarbeitungseinrichtung (508) folgende Merkmale aufweist:
k1) eine Extrahierungseinrichtung (536) zum Extrahieren der Sendezeiten des ersten Informationssignals und der zweiten Informationssignale aus den Empfangs-Informationssignalen;
k2) eine Laufzeit-Bestimmungseinrichtung (538) zum Bestimmen der Laufzeiten des ersten Informationssignals und der zweiten Informationssignale von der Referenz-Sende-Vorrichtung (202) beziehungsweise den Sende-Empfangs-Vorrichtungen (302) zu der Positionsbestimmungsvorrichtung (540) aus den Sendezeiten des ersten Informationssignals und der zweiten Informationssignale und den Empfangszeiten der Empfangs-Informationssignale; und
k3) eine Berechnungseinrichtung (52Q) zum Berechnen der Position des Objekts unter Verwendung der' Laufzeiten des ersten Informations'signals und der zweiten Informationssignale und der Positionen der Referenz-Sende-Vorrichtung (202) und der Sende-Empfangs-Vorrichtungen (302).

2. System (100) zur Bestimmung der Position eines Objekts nach Anspruch 1, bei dem die erste Sendeeinrichtung (208) und die zweiten Sendeeinrichtungen (312) ferner folgendes Merkmal aufweisen:
c3) eine Modulationseinrichtung (214, 318) zum Modulieren des ersten beziehungsweise zweiten Informationssignals auf ein Trägersignal, das eine Trägerfrequenz aufweist.

3. System (100) zur Bestimmung der Position eines Objekts nach Anspruch 2, bei dem die Verarbeitungseinrichtung (508) der Positionsbestimmungsvorrichtung (502) ferner folgendes Merkmal aufweist:
k4) eine Mehrwegsignalfilterungs- und Datenrückgewinnungs-Einrichtung (542) zum Demodulieren und Decodieren der Empfangs-Informationssignale, um sich auf ein Empfangsinformationsformat zu synchronisieren und gegebenenfalls die Informationsdaten weiter an die Extrahierungseinrichtung (536) zu leiten.

4. System (100) zur Bestimmung der Position eines Objekts nach Anspruch 2 oder 3, bei dem die zweite Empfangseinrichtung (506) der Positionsbestimmungsvorrichtung (502) ferner folgendes Merkmal aufweist:
j4) eine Mischeinrichtung (544) zum Mischen des Empfangssignals, das das erste und die zweiten Informationssignale aufweist, die auf das Trägersignal moduliert sind, in ein Zwischensignal, das eine Zwischenfrequenz aufweist.

5. System (100) zur Bestimmung der Position eines Objekts nach einem der vorhergehenden Ansprüche, bei dem die Decodierungseinrichtung (514) der zweiten Empfangseinrichtung (506) der Positionsbestimmungsvorrichtung (502) ferner folgendes Merkmal aufweist:
- mindestens eine Korrelationseinrichtung (516) für jede Referenz-Sende-Vorrichtung (202) und jede Sende-Empfangs-Vorrichtung (302) des Systems (100) zum Korrelieren des Empfangssignals mit dem ersten beziehungsweise zweiten Code, der der jeweiligen Referenz-Sende-Vorrichtung (202) oder Sende-Empfangs-Vorrichtung (302) zugeordnet ist, um ein korreliertes Empfangssignal zu erhalten;
- jeweils eine Integrationseinrichtung (518), die jeder Korrelationseinrichtung (516) zugeordnet ist, zum Integrieren des korrelierten Empfangssignals über die Zeit, um ein der jeweiligen Referenz-Sende-Vorrichtung (202) oder Sende-Empfangs-Vorrichtung (302) zugeordnetes Empfangs-Informationssignal zu erhalten.

6. System (100) zur Bestimmung der Position eines Objekts nach Anspruch 5, bei dem die Korrelationseinrichtung (516) einen Korrelator (520) zum Korrelieren des ersten beziehungsweise zweiten Codes mit dem Empfangssignal, um ein korreliertes Empfangssignal zu erhalten, aufweist, und bei dem die Integrationseinrichtung (518) einen dem Korrelator (520) zugeordneten Integrator (526) zum Integrieren des korrelierten Empfangssignals über die Zeit, um das dem ersten beziehungsweise zweiten Code zugeordnete Empfangs-Informationssignal zu erhalten, aufweist.

7. System (100) zur Bestimmung der Position eines Objekts nach Anspruch 6, bei dem die Korrelationseinrichtung (516) ferner einen weiteren Korrelator (522) zum Korre-' lieren des zeitversetzten ersten beziehungsweise zweiten Codes mit dem Empfangssignal, um ein korreliertes Empfangssignal zu erhalten, aufweist, und bei dem die Integrationseinrichtung (518) ferner einen weiteren dem weiteren Korrelator (522) zugeordneten Integrator (528) zum Integrieren des korrelierten Empfangssignals über die Zeit aufweist, um ein dem ersten beziehungsweise zweiten Code zugeordnetes zeitversetztes Empfangs-Informationssignal zu erhalten, das sich von dem Empfangs-Informationssignal unterscheidet, das auf einem direkten Weg zu der Positionsbestimmungsvorrichtung (502) gelangt.

8. System (100) zur Bestimmung der Position eines Objekts nach Anspruch 7, das mindestens drei weitere Korrelatoren (522, 524) und zugeordnete Integratoren (528, 530) für jede einem ersten beziehungsweise zweiten Code zugeordnete Korrelationseinrichtung (516) aufweist.

9. System (100) zur Bestimmung der Position eines Objekts nach einem der Ansprüche 1 bis 8, das ferner folgendes Merkmal aufweist:
eine Verbindungseinrichtung zum Verbinden der Referenz-Sende-Vorrichtung (202) mit jeder Sende-Empfangs-Vorrichtung (302) und zum Übertragen des Referenzzeit-Signals zu den Sende-Empfangs-Vorrichtungen (302), um die erste Uhrzeit jeder Sende-Empfangs-Vorrichtung (302) mit der Referenz-Uhrzeit der Referenz-Sende-Vorrichtung (202) mittels der Synchronisierungseinrichtung (308) jeder Sende-Empfangs-Vorrichtung (302) zu synchronisieren.

10. System (100) zur Bestimmung der Position eines Objekts nach einem der Ansprüche 1 bis 9, bei dem die erste Codelieferungseinrichtung (210), die zweiten Codelieferungseinrichtungen (314) und die dritte Codelieferungseinrichtung (512) einen Speicher und/oder rückgekoppelte Schieberegister aufweisen, die rauschähnliche Codes (PN-Codes) liefern.

11. System (100) zur Bestimmung der Position eines Objekts nach einem der Ansprüche 2 bis 10, bei dem das Trägersignal der Modulationseinrichtung (214, 318) ein Hochfrequenz-Trägersignal ist.

12. System (100) zur Bestimmung der Position eines objekts nach einem der Ansprüche 1 bis 11, bei dem das erste Informationssignal der ersten Signalerzeugungseinrichtung (206) der Referenz-Sende-Vorrichtung (202) ferner die Position der Referenz-Sende-Vorrichtung (202) aufweist, und das zweite informationssignal der zweiten Signalerzeugungseinrichtung (310) jeder Sende-Empfangs-Vorrichtung (302) ferner die Position der Sende-Empfangs-Vorrichtung (302) aufweist, und bei dem die Extrahierungseinrichtung (536) der Verarbeitungseinrichtung (514) der Positionsbestimmungsvorrichtung (502) ferner die Positionen der Referenz-Sende-Vorrichtung (202) und der Sende-Empfangs-Vorrichtungen (302) aus den Empfangs-Informationssignalen extrahiert.

13. System (100) zur Bestimmung der Position eines Objekts nach einem der Ansprüche 1 bis 12, bei dem die Positionsbestimmungsvorrichtung (502) ferner folgendes Merkmal aufweist:
1) einen Speicher (546) zum Speichern der Positionen der Referenz-Sende-Vorrichtung (202) und der Sende-Empfangs-Vorrichtungen (302).

14. System (100) zur Bestimmung der Position eines Objekts nach einem der Ansprüche 2 bis 13, bei dem die Modulationseinrichtungen (214, 318) der ersten Sendeeinrichtung (208) und der zweiten Sendeeinrichtungen (312) und die Mehrwegsignalfilterungs- und Datenrückgewinnungs-Einrichtung (542) der Verarbeitungseinrichtung (508) der Positionsbestimmungsvorrichtung (502) eine Phasenumtastungs-Modulation (PSK-Modulation) zum Modulieren des ersten beziehungsweise zweiten Informationssignals und/oder des Referenzzeit-Signals auf das Trägersignal und zum Demodulieren des ersten beziehungsweise zweiten Informationssignals und/oder des Referenzzeit-signals von dem Trägersignal verwenden.

15. System (100) zur Bestimmung der Position eines Objekts nach einem der Ansprüche 9 bis 14, bei dem die verbindungseinrichtung ein elektrisches oder optisches Kabel ist.

16. System (100) zur Bestimmung der Position eines Objekts nach einem der Ansprüche 1 bis 15, bei dem die Referenzzeit-Lieferungseinrichtung (204) der Referenz-Sende-Vorrichtung (202), die erste Zeit-Lieferungseinrichtungen (304) der Sende-Empfangs-Vorrichtungen (302) und/oder die zweite Zeit-Lieferungseinrichtung (504) der Positionsbestimmungsvorrichtung (502) folgendes Merkmal. aufweisen:
- eine Uhr zum Liefern der Referenz-Uhrzeit und/oder der ersten beziehungsweise zweiten Uhrzeit.

17. System (100) zur Bestimmung der Position eines Objekts nach Anspruch 16, bei dem die Synchronisierungseinrichtung (308) jeder Sende-Empfangs-Vorrichtung (302) folgendes Merkmal aufweist:
f1) eine Uhrzeit-Korrektureinrichtung zum Korrigieren der ersten Uhrzeit der Uhr der ersten Zeit-Lieferungseinrichtung (304) mit einem Zeitkorrekturwert, der den zeitlichen Unterschied der Referenz-Uhrzeit der Referenzzeit-Lieferungseinrichtung (204) der Referenz-Sende-Vorrichtung (202) und der ersten Uhrzeit der ersten Zeit-Liefe-rungseinrichtung (304) der Sende-Empfangs-Vorrichtung (302) darstellt.

18. System (100) zur Bestimmung der Position eines Objekts nach einem der Ansprüche. 12 bis 17, bei dem das erste Informationssignal und die zweiten Informationssignale ferner lokale Informationen, lokale Meldungen, spezifische Systemparameter, Synchronisierungsdaten, einen Umgebungs- oder Gebäüdeplan und/oder Verzeichnisse von Referenz-Sende-Vorrichtungen (202) und/oder Funkbalken aufweisen.

19. System (100) zur Bestimmung der Position eines Objekts nach einem der Ansprüche 13 bis 18, bei dem in dem Speicher (546) der Positionsbestimmungsvorrichtung (502) ferner ein Gebäudeplan oder ein Umgebungsplan gespeichert ist, um die Position des Objekts in einem Gebäude oder in einer Umgebung anzuzeigen.

20. System (100) zur Bestimmung der Position eines Objekts nach Anspruch 19, bei dem die Positionsbestimmungsvorrichtung (502) ferner folgendes Merkmal aufweist:
m) eine Informationsausgabeeinheit zum Ausgeben von Informationen über die Position, die von der Berechnungseinrichtung (540), der Verarbeitungseinrichtung (508) der Positionsbestimmungsvorrichtung (502) bestimmt wird, des Gebäudeplans und/oder des Umgebungsplans, der in dem Speicher (546) der Positionsbestimmungsvorrichtung (502) gespeichert ist, und/oder von optischen und akustischen Orientierungshilfen und/oder orientierungsanweisungen.

21. System (100) zur Bestimmung der Position eines Objekts nach einem der Ansprüche 3 bis 20, bei dem die Verarbeitungseinrichtung (508) der Positionsbestimmungsvorrichtung (502) ferner folgendes Merkmal aufweist:
k5) ein Mehrwegmodulfilter zum Filtern der Empfangsinformationssignale, um den Empfangs-Informationssignalen überlagerte Mehrwegsignale voneinander zu trennen.

22. System (100) zur Bestimmung der Position eines Objekts nach einem der Ansprüche 1 bis 21, bei dem die Referenz-Sende-Vorrichtung (202) eine weitere Sende-Empfangs-Vorrichtung (302) ist.

## Claims

1. A system (100) for determining the position of an object, comprising:
a reference transmitter device (202) arranged in a fixed position, said reference transmitter device (202) including:
a) a reference time supplying means (204) for supplying a reference time signal indicating a reference time;
b) a first signal generating means (206) for generating a first information signal containing at least the transmission time of the first information signal that is determined from the reference time signal; and
c) a first transmitter means (208) for transmitting the first information signal and/or the reference time signal, said first transmitter means (208) including:
c1) a first code supplying means (210) for supplying a first code associated with the reference transmitter device (202); and
c2) a first coding means (212) for coding the first information signal with the first code;
two or more transmitter/receiver devices (302) arranged in fixed positions with respect to each other and to the reference transmitter device (202), each transmitter/receiver device (302) including:
d) a first time supplying means (304) for supplying a first time signal indicating a first time;
e) a first receiver means (306) for receiving the reference time signal from the reference transmitter device(202);
f) a synchronization means (308) for processing the first time signal and the reference time signal and for synchronizing the first time with the reference time in consideration of the transit times of the reference time signal from the reference transmitter device (202) to the transmitter/receiver device (302);
g) a second signal processing means (310) for generating a second information signal containing at least the transmission time of the second information signal that is determined from the first time signal; and
h) a second transmitter means (312) for transmitting the second information signal, said second transmitter means (312) including:
h1) a second code supplying means (314) for supplying a second code associated with the transmitter/receiver device (302) and differing from the first code of the reference transmitter device (202) and the second codes of the other transmitter/receiver devices (302); and
h2) a second coding means (316) for coding the second information signal with the second code; and
a position determining device (502) for determining the position of the object, said object including the position determining device (502) and said position determining device (502) including:
i) a second time supplying means (504) for supplying a second time signal indicating a second time;
j) a second receiver means (506) for receiving a reception signal containing the first information signal and the second information signals, said second receiver means (506) including:
j1)a third code supplying means (512) for supplying the first code and the second codes;
j2)a decoding means (514) for decoding the reception signal using the first code supplied from the third code supplying means (522) and the second codes supplied from the third code supplying means (522) in order to obtain reception information signals corresponding to the first information signal and the second information signals; and
j3)a reception time determining means (510) for determining the reception time of each reception information signal with the second time signal of the second time supplying means (504); and
k) a processing means (508) for processing the reception information signals, said processing means (508) including:
k1)an extraction means (536) for extracting the transmission times of the first information signal and the second information signals from the reception information signals;
k2)a transit time determining means (538) for determining the transmit times of the first information signal and the second information signals from the reference transmitter device (202) and the transmitter/receiver devices (302), respectively, to the position determining device (540) on the basis of the transmission times of the first information signal and the second information signals and the reception times of the reception information signals; and
k3) a calculating means (520) for calculating the position of the object using the transit times of the first information signal and the second information signals and the positions of the reference transmitter device (202) and the transmitter/receiver devices (302).

2. A system (100) for determining the position of an object according to claim 1, with said first transmitter means (208) and said second transmitter means (312) further comprising:
c3)a modulation means (214, 318) for modulating the first and, respectively, the second information signals onto a carrier signal having a carrier frequency.

3. A system (100) for determining the position of an object according to claim 2, with said processing means (508) of the position determining device (502) further comprising:
k4) a multipath signal filtering and data recovering means (542) for demodulating and decoding the reception information signals, so as to synchronize to a reception information format and, possibly, for passing the information data on to the extraction means (536).

4. A system (100) for determining the position of an object according to claim 2 or 3, with said second receiver means (506) of the position determining device (502) further comprising:
j4)a mixing means (544) for mixing the reception signal containing the first and second information signals modulated upon the carrier signal, into an intermediate signal having an intermediate frequency.

5. A system (100) for determining the position of an object according to any of the preceding claims, with said decoding means (514) of the second receiver means (506) of the position determining device (502) comprising furthermore:
- at least one correlation means (544) for each reference transmitter device (202) and each transmitter/receiver device (302) of the system (100) for correlating the reception signal with the first and second codes, respectively, associated with the respective reference transmitter device (202) or transmitter/receiver device (302) in order to obtain a correlated reception signal;
- one integration means (518) each associated with each correlation means (516) for integrating the correlated reception signal over time so as to obtain a reception information signal associated with the respective reference transmitter device (202) or transmitter/receiver device (302).

6. A system (100) for determining the position of an object according to claim 5, wherein the correlation means (516) comprises a correlator (520) for correlating the first and second codes, respectively, with the reception signal in order to obtain a correlated reception signal, and wherein the integration means (518) comprises an integrator (526) associated with the correlator (520) for integrating the correlated reception signal over time, so as to obtain the reception information signal associated with the first and second codes, respectively.

7. A system (100) for determining the position of an object according to claim 6, wherein the correlation means (516) comprises furthermore an additional correlator (522) for correlating the time-shifted first and second codes, respectively, with the reception signal, so as to obtain a correlated reception signal, and wherein the integration means (518) comprises furthermore an additional integrator (528) associated with said additional correlator (522) for integrating the correlated reception signal over time, so as to obtain a time-shifted reception information signal associated with the first and second codes, respectively, and differing from the reception information signal reaching the position determining device (502) on a direct path.

8. A system (100) for determining the position of an object according to claim 7, comprising at least three additional correlators (522, 524) and associated integrators (528, 530) for each correlation means (516) associated with a first and second code, respectively.

9. A system (100) for determining the position of an object according to any of claims 1 to 8, further comprising:
a connecting means for connecting the reference transmitter device (202) with each transmitter/receiver device (302) and for transmitting the reference time signal to the transmitter/receiver devices (302) in order to synchronize the first time of each transmitter/receiver device (302) with the reference time of the reference transmitter device (202) by means of the synchronization means (308) of each transmitter/receiver device (302).

10. A system (100) for determining the position of an object according to any of claims 1 to 9, wherein the first code supplying means (210), the second code supplying means (314) and the third code supplying means (512) have a memory and/or fed-back shift registers supplying pseudo noise codes (PN codes).

11. A system (100) for determining the position of an object according to any of claims 2 to 10, wherein the carrier signal of the modulation means (214, 318) is a radio-frequency carrier signal.

12. A system (100) for determining the position of an object according to any of claims 1 to 11, wherein the first information signal of the first signal generating means (206) of the reference transmitter device (202) further comprises the position of the reference transmitter device (202), wherein the second information signal of the second signal generating means (310) of each transmitter/receiver device (302) further comprises the position of the transmitter/receiver device (302), and wherein the extraction means (536) of the processing means (514) of the position determining device (502) furthermore extracts the positions of the reference transmitter device (202) and of the transmitter/receiver devices (302) from the reception information signals.

13. A system (100) for determining the position of an object according to any of claims 1 to 12, wherein the position determining device (502) further comprises:
l) a memory (546) for storing the positions of the reference transmitter device (202) and of the transmitter/receiver devices (302).

14. A system (100) for determining the position of an object according to any of claims 2 to 13, wherein the modulation means (214, 318) of the first transmitter means (208) and the second transmitter means (312) as well as the multipath signal filtering and data recovering means (542) of the processing means (508) of the position determining device (502) employ phase shift keying modulation (PSK modulation) for modulating the first and, respectively, second information signal and/or the reference time signal onto the carrier signal and for demodulating the first and, respectively, second information signal and/or the reference time signal form the carrier signal.

15. A system (100) for determining the position of an object according to any of claims 9 to 14, wherein the connecting means is an electrical or optical cable.

16. A system (100) for determining the position of an object according to any of claims 1 to 15, wherein the reference time supplying means (204) of the reference transmitter device (202), the first time supplying means (304) of the transmitter/receiver devices (302) and/or the second time supplying means (504) of the position determining device (502) comprise:
- a clock for supplying the reference time and/or the first and second times, respectively.

17. A system (100) for determining the position of an object according to claim 16, wherein the synchronization means (308) of each transmitter/receiver device (302) comprises:
f1) a time correction means for correcting the first time of the clock of the first time supplying means (304) using a time correction value representing the difference in time between the reference time of the reference time supplying means (204) of the reference transmitter device (202) and the first time of the first time supplying means (304) of the transmitter/receiver device (302).

18. A system (100) for determining the position of an object according to any of claims 12 to 17, wherein the first information signal and the second information signals further comprise local information, local messages, specific system parameters, synchronization data, a map of the surroundings or a building plan and/or directories of reference transmitter devices (202) and/or radio beacons.

19. A system (100) for determining the position of an object according to any of claims 13 to 18, wherein the memory (546) of the position determining device (502) further has a building plan or a map of the surroundings stored therein in order to indicate the position of the object in a building or in surroundings.

20. A system (100) for determining the position of an object according to claim 19, wherein the position determining device (502) further comprises:
m) an information outputting unit for outputting information on the position determined by the calculating means (540) of the processing means (508) of the position determining device (502), the building plan and/or the map of the surroundings stored in the memory (546) of the position determining device (502), and/or optical and acoustical orientation aids and/or orientation instructions.

21. A system (100) for determining the position of an object according to any of claims 3 to 20, wherein the processing means (508) of the position determining device (502) further comprises:
k5) a multipath module filter for filtering the reception information signals in order to separate multipath signals superimposed on the reception information signals from each other.

22. A system (100) for determining the position of an object according to any of claims 1 to 21, wherein the reference transmitter device (202) is an additional transmitter/receiver device (302).

## Revendications

1. Système (100) pour déterminer la position d'un objet, aux caractéristiques suivantes :
un dispositif de transmission de référence (202) disposé en une position fixe, le dispositif de transmission de référence (202) présentant les caractéristiques suivantes :
a) un dispositif de fourniture de temps de référence (204) destiné à fournir un temps de référence indiquant un temps d'horloge de référence ;
b) un premier dispositif de génération de signal (206) destiné à générer un premier signal d'information présentant au moins le moment de transmission du premier signal d'information qui est déterminé à partir du signal de temps de référence ; et
c) un premier dispositif de transmission (208) destiné à transmettre le premier signal d'information et/ou le signal de temps de référence, le premier dispositif de transmission (208) présentant les caractéristiques suivantes :
c1) un premier dispositif de fourniture de code (210) destiné à fournir un premier code associé au dispositif de transmission de référence (202) ; et
c2) un premier dispositif de codage (212) destiné à coder le premier signal d'information par le premier code ;
deux ou plusieurs dispositifs de transmission/réception (302) disposés en des positions fixes l'un par rapport à l'autre et par rapport au dispositif de transmission de référence (202), chaque dispositif de transmission/réception (302) présentant les caractéristiques suivantes :
d) un premier dispositif de fourniture de temps (304) destiné à fournir un premier signal de temps indiquant un premier temps d'horloge ;
e) un premier dispositif de réception (306) destiné à recevoir le signal de temps de référence du dispositif de transmission de référence (202) ;
f) un dispositif de synchronisation (308) destiné à traiter le premier signal de temps et le signal de temps de référence et à synchroniser le premier temps d'horloge avec le temps d'horloge de référence en tenant compte des temps de propagation du signal de temps de référence du dispositif de transmission de référence (202) vers le dispositif de transmission/réception (302) ;
g) un deuxième dispositif de génération de signal (310) destiné à générer un deuxième signal d'information présentant au moins le moment de transmission du deuxième signal d'information déterminé à partir du premier signal de temps ; et
h) un deuxième dispositif de transmission (312) destiné à transmettre le deuxième signal d'information, le deuxième dispositif de transmission (312) présentant les caractéristiques suivantes :
h1) un deuxième dispositif de fourniture de code (314) destiné à fournir un deuxième code associé au dispositif de transmission/réception (302) et qui se distingue du premier code du dispositif de transmission de référence (202) et des deuxièmes codes des autres dispositifs de transmission/réception (302) ; et
h2) un deuxième dispositif de codage (316) destiné à coder le deuxième signal d'information par le deuxième code ; et
un dispositif de détermination de position (502) destiné à déterminer la position de l'objet, l'objet présentant le dispositif de détermination de position (502) et le dispositif de détermination de position (502) présentant les caractéristiques suivantes :
i) un deuxième dispositif de fourniture de temps (504) destiné à fournir un deuxième signal de temps indiquant un deuxième temps d'horloge ;
j) un deuxième dispositif de réception (506) destiné à recevoir un signal de réception présentant le premier signal d'information et les deuxièmes signaux d'information, le deuxième dispositif de réception (506) présentant les caractéristiques suivantes :
j1) un troisième dispositif de fourniture de code (512) destiné à fournir le premier code et les deuxièmes codes ;
j2) un dispositif de décodage (514) destiné à décoder le signal de réception à l'aide du premier code fourni par le troisième dispositif de fourniture de code (522) et du deuxième code fourni par le troisième dispositif de fourniture de code (522), pour obtenir des signaux d'information de réception correspondant au premier signal d'information et aux seconds signaux d'information ; et
j3) un dispositif de détermination de moment de réception (510) destiné à déterminer le moment de réception de chaque signal d'information de réception par le deuxième signal de temps du deuxième dispositif de fourniture de temps (504) ; et
k) un dispositif de traitement (508) destiné à traiter les signaux d'information de réception, le dispositif de traitement (508) présentant les caractéristiques suivantes :
k1) un dispositif d'extraction (536) destiné à extraire les moments de transmission du premier signal d'information et des deuxièmes signaux d'information des signaux d'information de réception ;
k2) un dispositif de détermination de temps de propagation (538) destiné à déterminer les temps de propagation du premier signal d'information et des deuxièmes signaux d'information du dispositif de transmission de référence (202) ou des dispositifs de transmission/réception (302) vers le dispositif de détermination de position (540) à partir des moments de transmission du premier signal d'information et des deuxièmes signaux d'information et des moments de réception des signaux d'information de réception ; et
k3) un dispositif de calcul (520) destiné à calculer la position de l'objet à l'aide des temps de propagation du premier signal d'information et des deuxièmes signaux d'information et des positions du dispositif de transmission de référence (202) et des dispositifs de transmission/réception (302).

2. Système (100) pour déterminer la position d'un objet selon la revendication 1, dans lequel le premier dispositif de transmission (208) et les deuxièmes dispositifs de transmission (312) présentent, par ailleurs, les caractéristique suivantes :
c3) un dispositif de modulation (214, 318) destiné à moduler le premier ou le deuxième signal d'information sur un signal porteur présentant une fréquence de porteuse.

3. Système (100) pour déterminer la position d'un objet selon la revendication 2, dans lequel le dispositif de traitement (508) du dispositif de détermination de position (502) présente, par ailleurs la caractéristique suivante:
k4) un dispositif de filtration de signaux à trajets multiples et de récupération de données (542) destiné à démoduler et à décoder les signaux d'information de réception, pour se synchroniser sur un format d'information de réception, et à transmettre, éventuellement, les données d'information au dispositif d'extraction (536).

4. Système (100) pour déterminer la position d'un objet selon la revendication 2 ou 3, dans lequel le deuxième dispositif de réception (506) du dispositif de détermination de position (502) présente, par ailleurs la caractéristique suivante :
j4) un dispositif mélangeur (544) destiné à mélanger le signal de réception présentant les premier et deuxième signaux d'information modulés sur le signal porteur avec un signal intermédiaire présentant une fréquence intermédiaire,

5. Système (100) pour déterminer la position d'un objet selon l'une des revendications précédentes, dans lequel le dispositif de décodage (514) du deuxième dispositif de réception (506) du dispositif de détermination de position (502) présente, par ailleurs, la caractéristique suivante :
- au moins un dispositif de corrélation (516) pour chaque dispositif de transmission de référence (202) et chaque dispositif de transmission/réception (302) du système (100), destiné à corréler le signal de réception avec le premier ou le deuxième code associé au dispositif de transmission de référence (202) ou au dispositif de transmission/réception (302) respectif, pour obtenir un signal de réception corrélé ;
- un dispositif d'intégration (518) associé à chaque dispositif de corrélation (516), destiné à intégrer le signal de réception corrélé dans le temps, pour obtenir un signal d'information de réception associé au dispositif de transmission de référence (202) ou au dispositif de transmission/réception (302) respectif.

6. Système (100) pour déterminer la position d'un objet selon la revendication 5, dans lequel le dispositif de corrélation (516) présente un corrélateur (520) destiné à corréler le premier ou le deuxième code avec le signal de réception, pour obtenir un signal de réception corrélé, et dans lequel le dispositif d'intégration (518) présente un intégrateur (526) associé au corrélateur (520), destiné à intégrer le signal de réception corrélé dans le temps, pour obtenir le signal d'information de réception associé au premier ou au deuxième code.

7. Le système (100) pour déterminer la position d'un objet selon la revendication 6, dans lequel le dispositif de corrélation (516) présente, par ailleurs, un autre corrélateur (522) destiné à corréler le premier ou le deuxième code décalé dans le temps avec le signal de réception, pour obtenir un signal de réception corrélé, et dans lequel le dispositif d'intégration (518) présente, par ailleurs, un autre intégrateur (528) associé à l'autre corrélateur (522), destiné à intégrer le signal de réception corrélé dans le temps, pour obtenir un signal d'information de réception associé au premier ou deuxième code qui diffère du signal d'information de réception arrivant par une voie directe au dispositif de détermination de position (502).

8. Système (100) pour déterminer la position d'un objet selon la revendication 7, présentant au moins trois autres corrélateurs (522, 524) et intégrateurs (528, 530) associés pour chaque dispositif de corrélation (516) associé à un premier ou deuxième code.

9. Système (100) pour déterminer la position d'un objet selon l'une des revendications 1 à 8, présentant, par ailleurs, la caractéristique suivante :
un dispositif de liaison destiné à relier le dispositif de transmission de référence (202) à chaque dispositif de transmission/réception (302) et à transmettre le signal de temps de référence aux dispositifs de transmission/réception (302), pour synchroniser le premier temps d'horloge de chaque dispositif de transmission/réception (302) avec le temps d'horloge de référence du dispositif de transmission de référence (202) au moyen du dispositif de synchronisation (308) de chaque dispositif de transmission/réception (302).

10. Système (100) pour déterminer la position d'un objet selon l'une des revendications 1 à 9, dans lequel le premier dispositif de fourniture de code (210), les deuxièmes dispositifs de fourniture de code (314) et le troisième dispositif de fourniture de code (512) présentent une mémoire et/ou des registres de décalage rétro-couplés qui fournissent des codes ressemblant à du bruit (codes PN).

11. Système (100) pour déterminer la position d'un objet selon l'une des revendications 2 à 10, dans lequel le signal porteur du dispositif de modulation (214, 318) est un signal porteur haute fréquence.

12. Système (100) pour déterminer la position d'un objet selon l'une des revendications 1 à 11, dans lequel le premier signal d'information du premier dispositif de génération de signal (206) du dispositif de transmission de référence (202) présente, par ailleurs, la position du dispositif de transmission de référence (202) et le deuxième signal d'information du deuxième dispositif de génération de signal (310) de chaque dispositif de transmission/réception (302) présente, par ailleurs, la position du dispositif de transmission/réception (302) et dans lequel le dispositif d'extraction (536) du dispositif de traitement (514) du dispositif de détermination de position (502) extrait, par ailleurs, les positions du dispositif de transmission de référence (202) et des dispositifs de transmission/réception (302) des signaux d'information de réception.

13. Système (100) pour déterminer la position d'un objet selon l'une des revendications 1 à 12, dans lequel le dispositif de détermination de position (502) présente, par ailleurs, la caractéristique suivante :
l) une mémoire (546) destinée à mémoriser les positions du dispositif de transmission de référence (202) et des dispositifs de transmission/réception (302).

14. Système (100) pour déterminer la position d'un objet selon l'une des revendications 2 à 13, dans lequel les dispositifs de modulation (214, 318) du premier dispositif de transmission (208) et des deuxièmes dispositifs de transmission (312) et le dispositif de filtration de signaux à trajets multiples et de récupération données (542) du dispositif de traitement (508) du dispositif de détermination de position (502) utilisent une modulation à décalage de phase (modulation PSK) pour moduler le premier ou le deuxième signal d'information et/ou le signal de temps de référence sur le signal porteur et pour démoduler le premier ou le deuxième signal d'information et/ou le signal de temps de référence du signal porteur.

15. Système (100) pour déterminer la position d'un objet selon l'une des revendications 9 à 14, dans lequel le dispositif de liaison est un câble électrique ou à fibres optiques.

16. Système (100) pour déterminer la position d'un objet selon l'une des revendications 1 à 15, dans lequel le dispositif de fourniture de temps de référence (204) du dispositif de transmission de référence (202), les premiers dispositifs de fourniture de temps (304) des dispositifs de transmission/réception (302) et/ou le deuxième dispositif de fourniture de temps (504) du dispositif de détermination de position (502) présentent la caractéristique suivante :
- une horloge destinée à fournir le temps d'horloge de référence et/ou le premier et/ou le deuxième temps d'horloge.

17. Système (100) pour déterminer la position d'un objet selon la revendication 16, dans lequel le dispositif de synchronisation (308) de chaque dispositif de transmission/réception (302) présente la caractéristique suivante :
f1) un dispositif de correction de temps d'horloge destiné à corriger le premier temps d'horloge du premier dispositif de fourniture de temps (304) par une valeur de correction de temps représentant la différence de temps entre le temps d'horloge de référence du dispositif de fourniture de temps de référence (204) du dispositif de transmission de référence (202) et le premier temps d'horloge du premier dispositif de fourniture de temps (304) du dispositif de transmission/réception (302).

18. Système (100) pour déterminer la position d'un objet selon l'une des revendications 12 à 17, dans lequel le premier signal d'information et les deuxièmes signaux d'information présentent, par ailleurs, des informations locales, des messages locaux, des paramètres de système spécifiques, des données de synchronisation, un plan de l'environnement ou du bâtiment et/ou des listes de dispositifs de transmission de référence (202) et/ou barres radio.

19. Système (100) pour déterminer la position d'un objet selon l'une des revendications 13 à 18, dans lequel est mémorisé, dans la mémoire (546) du dispositif de détermination de position (502), par ailleurs, un plan de bâtiment ou un plan d'environnement, pour indiquer la position de l'objet dans un bâtiment ou dans un environnement.

20. Système (100) pour déterminer la position d'un objet selon la revendication 19, dans lequel le dispositif de détermination de position (502) présente, par ailleurs, la caractéristique suivante :
m) une unité de sortie d'informations destinée à sortir des informations sur la position déterminée par le dispositif de calcul (540) du dispositif de traitement (508) du dispositif de détermination de position (502), le plan de bâtiment et/ou le plan d'environnement mémorisé dans la mémoire (546) du dispositif de détermination de position (502) et/ou des aides optiques et acoustiques et/ou des indications d'orientation.

21. Système (100) pour déterminer la position d'un objet selon l'une des revendications 3 à 20, dans lequel le dispositif de traitement (508) du dispositif de détermination de position (502) présente, par ailleurs, la caractéristique suivante :
k5) un filtre de module à trajets multiples destiné à filtrer les signaux d'information de réception, pour séparer l'un de l'autre les signaux à trajets multiples superposés aux signaux d'information de réception.

22. Système (100) pour déterminer la position d'un objet selon l'une des revendications 1 à 21, dans lequel le dispositif de transmission de référence (202) est un autre dispositif de transmission/réception (302).
